# EUROPÄISCHE PATENTSCHRIFT

(11) **EP 3 490 898 B1**
(45) Veröffentlichungstag und Bekanntmachung des Hinweises auf die Patenterteilung: **15.10.2025**
(21) Anmeldenummer: 17742764.8
(22) Anmeldetag: 26.07.2017
(51) Int. Cl.: B65D 19/31, B31D 3/02, B32B 3/18

(54) **PALETTE MIT PLATTEN UND ROHRSEGMENTEN, KUFE FÜR EINE PALETTE, SANDWICH-BLOCK UND VERFAHREN ZUR HERSTELLUNG EINER PALETTE**
PALLET WITH PLATES AND TUBE SEGMENTS, SKID FOR A PALLET, SANDWICH BLOCK AND METHOD FOR MANUFACTURING A PALLET
PALETTE AVEC PLAQUES ET SEGMENTS DE TUBE, PATIN POUR UNE PALETTE, BLOC SANDWICH ET PROCÉDÉ DE FABRICATION D'UNE PALETTE

(30) Priorität: 29.07.2016 DE 102016114139; 25.01.2017 EP 17153146
(43) Veröffentlichungstag der Anmeldung: 05.06.2019
(73) Patentinhaber: MAVO Hamburg GmbH, 21079 Hamburg (DE)
(72) Erfinder: KUHMANN, Jochen, 10783 Berlin (DE); ALBRECHT, Matthias, 10823 Berlin (DE); KUJUS-TENEKEDSHIJEW, Roman, 17192 Federow (DE)
(74) Vertreter: Sprenger, Dominik
(86) Internationale Anmeldenummer: PCT/EP2017/068926
(87) Internationale Veröffentlichungsnummer: WO 2018/019906

(56) Entgegenhaltungen:
- WO-A1-2010/109253
- WO-A1-2017/021344
- CN-Y- 2 818 356
- DE-A1- 19 845 991
- FR-A5- 2 087 654
- JP-A- 2003 040 268
- JP-A- 2005 188 252
- JP-A- 2007 045 516
- US-A- 2 477 852
- US-A- 2 544 657
- US-A- 3 200 489
- US-A1- 2008 196 633
- US-A1- 2010 199 889
- US-A1- 2015 174 881

## Beschreibung

Die Erfindung betrifft eine Palette, insbesondere für den Warentransport, sowie eine Kufe für eine Palette, einen Sandwich-Block zur Erzeugung einer Schicht einer Palette, und ein Verfahren zur Herstellung einer Palette.

Aus dem Stand der Technik sind Transportpaletten nach EN 13698-1 und UIC 435-2 (Europoolpaletten) bekannt. Diese weisen drei Bodenbretter auf, die mittels jeweils drei Klötzen mit drei Querbrettern verbunden sind, auf denen fünf Deckbretter angeordnet sind. Die entsprechenden Bretter sind aus Massivholz gefertigt.

Ein Nachteil von Massivholzpaletten ist das relativ hohe Eigengewicht (je nach Holzfeuchte 20 bis 24 kg bei Maßen von 1200 x 800 x 144 mm).

Bekannt sind weiterhin Paletten, die Deckplatten und eine Zwischenschicht aufweisen, wobei die Zwischenschicht/Versteifungen eine Wabenstruktur besitzt (US 2,544,657). Derartige Paletten können Aussparungen aufweisen. US 2,544,657 beschreibt Deckplatten aus Metall und Versteifungen aus Papier.

In US 3,200,489 wird die Herstellung einer Wabenstruktur aus Metall beschrieben, insbesondere die Faltung sowie das Verbinden von Rohrsegmenten unter Hitzeeinwirkung.

US 2015/174 881 A1 beschreibt, dass eine Waben-Struktur-Schicht von einem Waben-Struktur-Block abgeschnitten werden kann und dass die Platten, aus denen die Waben gefertigt werden, z. B. aus Papier oder Folie hergestellt sind.

Hieraus ergibt sich die Aufgabe, eine Palette zur Verfügung zu stellen, die im Vergleich zum Stand der Technik ein verringertes Gewicht bei gleicher Stabilität aufweist.

Diese Aufgabe wird durch die erfindungsgemäße Palette nach Anspruch 1, die erfindungsgemäße Kufe nach Anspruch 10, den erfindungsgemäßen Sandwich-Block nach Anspruch 11 sowie das erfindungsgemäße Verfahren nach Anspruch 13 gelöst. Spezielle Ausführungsformen der Palette sind in den Unteransprüchen 2 bis 9 angegeben, spezielle Ausführungsformen des Sandwich-Blocks sind in dem Unteranspruch 12 angegeben und spezielle Ausführungsformen des Verfahrens sind in dem Unteranspruch 14 angegeben. Die Ausführungsformen werden im Folgenden beschrieben.

Ein erster Aspekt der Erfindung betrifft eine Palette, aufweisend einen Grundkörper, der zumindest die folgenden Komponenten aufweist:
- eine erste Platte und eine parallel zu der ersten Platte angeordnete zweite Platte, wobei die erste Platte und die zweite Platte jeweils in Richtung einer Palettenbreite und einer Palettentiefe erstreckt sind, wobei die Palette eine senkrecht zu der Palettenbreite und der Palettentiefe verlaufende Palettenhöhe aufweist,
- eine zwischen der ersten Platte und der zweiten Platte angeordnete Schicht, die eine Mehrzahl von Rohrsegmenten aufweist, wobei die Rohrsegmente jeweils zwei Schnittenden aufweisen, welche die Rohrsegmente in Umfangsrichtung begrenzen, und wobei die Rohrsegmente jeweils eine Segmenttiefe, eine Segmentbreite und eine Segmenthöhe aufweisen, wobei die Segmenttiefe der maximalen Erstreckung des Rohrsegments in Längserstreckungsrichtung entspricht, und wobei die Segmentbreite der maximalen Erstreckung des Rohrsegments entlang einer (gedachten) Verbindunglinie zwischen den Schnittenden senkrecht zu der Längserstreckungsrichtung (also im Querschnitt des Rohrsegments) entspricht, und wobei die Segmenthöhe der maximalen Erstreckung senkrecht zu der Segmenttiefe und der Segmentbreite entspricht, und wobei die Rohrsegmente derart in der Schicht angeordnet sind, dass die Segmenttiefe in Richtung der Palettenhöhe verläuft, die Segmentbreite in Richtung der Palettenbreite verläuft und die Segmenthöhe in Richtung der Palettentiefe verläuft, wobei die Schicht wenigstens eine in Richtung der Palettenhöhe durchgängige Aussparung aufweist, und wobei die erste Platte wenigstens eine erste Öffnung aufweist, die mit der wenigstens einen Aussparung zumindest teilweise überlappt.

Das bedeutet insbesondere, dass die wenigstens eine erste Öffnung dieselben Abmessungen wie die wenigstens eine Aussparung aufweist, wobei die wenigstens eine erste Öffnung mit der wenigstens einen Aussparung zur Deckung gebracht ist, oder dass die wenigstens eine erste Öffnung kleiner ist als die wenigstens eine Aussparung, wobei ein Teil der wenigstens einen Aussparung mit der wenigstens einen ersten Öffnung zur Deckung gebracht ist.

Die Schicht weist mehrere in Richtung der Palettenbreite verlaufende Reihen von Rohrsegmenten auf, wobei insbesondere benachbarte Rohrsegmente innerhalb der Reihen mechanisch verbunden sind, wobei die Schicht wenigstens eine in Richtung der Palettenbreite verlaufende erste Reihe von Rohrsegmenten, wenigstens eine in Richtung der Palettenbreite verlaufende zweite Reihe von Rohrsegmenten und wenigstens eine Leiste aufweist, wobei die Rohrsegmente der wenigstens einen ersten Reihe und die Rohrsegmente der wenigstens einen zweiten Reihe über die wenigstens eine Leiste mechanisch verbunden sind, wobei insbesondere die Rohrsegmente der wenigstens einen ersten Reihe mittels ihrer Schnittenden mit einer ersten Leistenseite der wenigstens einen Leiste mechanisch verbunden sind, und wobei die Rohrsegmente der wenigstens einen zweiten Reihe mittels ihrer Schnittenden mit einer der ersten Leistenseite gegenüberliegenden zweiten Leistenseite der wenigstens einen Leiste mechanisch verbunden sind. Die erste Platte, die zweite Platte und/oder die Rohrsegmente weisen einen Holzwerkstoff auf oder sind aus einem Holzwerkstoff gebildet.

Ein erster Unteraspekt des ersten Aspekts der Erfindung betrifft eine Palette, aufweisend einen Grundkörper, der zumindest die folgenden Komponenten aufweist:
- eine erste Platte und eine parallel zu der ersten Platte angeordnete zweite Platte, wobei die erste Platte und die zweite Platte jeweils in Richtung einer Palettenbreite und einer Palettentiefe erstreckt sind, wobei die Palette eine senkrecht zu der Palettenbreite und der Palettentiefe verlaufende Palettenhöhe aufweist,
- eine zwischen der ersten Platte und der zweiten Platte angeordnete Schicht, die eine Mehrzahl von Rohrsegmenten aufweist, wobei die Rohrsegmente jeweils zwei Schnittenden aufweisen, welche die Rohrsegmente in Umfangsrichtung begrenzen, und wobei die Rohrsegmente jeweils eine Segmenttiefe, eine Segmentbreite und eine Segmenthöhe aufweisen, wobei die Segmenttiefe der maximalen Erstreckung des Rohrsegments in Längserstreckungsrichtung entspricht, und wobei die Segmentbreite der maximalen Erstreckung des Rohrsegments entlang einer (gedachten) Verbindunglinie zwischen den Schnittenden senkrecht zu der Längserstreckungsrichtung (also im Querschnitt des Rohrsegments) entspricht, und wobei die Segmenthöhe der maximalen Erstreckung senkrecht zu der Segmenttiefe und der Segmentbreite entspricht, und wobei die Rohrsegmente derart in der Schicht angeordnet sind, dass die Segmenttiefe in Richtung der Palettenhöhe verläuft, die Segmentbreite in Richtung der Palettenbreite verläuft und die Segmenthöhe in Richtung der Palettentiefe verläuft, wobei die Schicht wenigstens eine in Richtung der Palettenhöhe durchgängige Aussparung aufweist, wobei die wenigstens eine Aussparung in Richtung der Palettenbreite eine Erstreckung aufweist, die mindestens der Segmentbreite entspricht und in Richtung der Palettentiefe eine Erstreckung aufweist, die mindestens der Segmenthöhe entspricht, und wobei die erste Platte wenigstens eine erste Öffnung aufweist, die mit der wenigstens einen Aussparung zumindest teilweise überlappt.

Ein zweiter Unteraspekt des ersten Aspekts der Erfindung betrifft eine Palette, aufweisend einen Grundkörper, der zumindest die folgenden Komponenten aufweist:
- eine erste Platte und eine parallel zu der ersten Platte angeordnete zweite Platte, wobei die erste Platte und die zweite Platte jeweils in Richtung einer Palettenbreite und einer Palettentiefe erstreckt sind, wobei die Palette eine senkrecht zu der Palettenbreite und der Palettentiefe verlaufende Palettenhöhe aufweist,
- eine zwischen der ersten Platte und der zweiten Platte angeordnete Schicht, die eine Mehrzahl von Rohrsegmenten aufweist, wobei die Rohrsegmente jeweils zwei Schnittenden aufweisen, welche die Rohrsegmente in Umfangsrichtung begrenzen, und wobei die Rohrsegmente jeweils eine Segmenttiefe, eine Segmentbreite und eine Segmenthöhe aufweisen, wobei die Segmenttiefe der maximalen Erstreckung des Rohrsegments in Längserstreckungsrichtung entspricht, und wobei die Segmentbreite der maximalen Erstreckung des Rohrsegments entlang einer (gedachten) Verbindunglinie zwischen den Schnittenden senkrecht zu der Längserstreckungsrichtung (also im Querschnitt des Rohrsegments) entspricht, und wobei die Segmenthöhe der maximalen Erstreckung senkrecht zu der Segmenttiefe und der Segmentbreite entspricht, und wobei die Rohrsegmente derart in der Schicht angeordnet sind, dass die Segmenttiefe in Richtung der Palettenhöhe verläuft, die Segmentbreite in Richtung der Palettenbreite verläuft und die Segmenthöhe in Richtung der Palettentiefe verläuft, wobei die Schicht wenigstens eine in Richtung der Palettenhöhe durchgängige Aussparung aufweist, wobei die wenigstens eine Aussparung in Richtung der Palettenbreite eine Erstreckung aufweist, die geringer als die Segmentbreite ist und in Richtung der Palettentiefe eine Erstreckung aufweist, die geringer als die Segmenthöhe ist, und wobei die erste Platte wenigstens eine erste Öffnung aufweist, die mit der wenigstens einen Aussparung zumindest teilweise überlappt.

Die erfindungsgemäße Palette zeichnet sich insbesondere aufgrund der verwendeten Holzwerkstoffe und aufgrund der Hohlräume in der Schicht durch ein sehr geringes Gewicht bei gleichzeitig großer mechanischer Stabilität aus. Weiterhin lassen sich vorteilhafterweise in die Aussparungen zusätzliche Komponenten, z.B. Füße einer Palette, einbringen.

Im Zusammenhang der vorliegenden Erfindung ist mit dem Begriff Rohrsegment ein Teil eines wirklichen oder gedachten Rohres mit einer Längserstreckungsrichtung gemeint. Der Querschnitt des Rohres senkrecht zu seiner Längserstreckungsrichtung weist einen Umfang, also eine gedachte Linie, welche den Querschnitt an seiner Außenseite begrenzt, auf. Dabei ist der Querschnitt nicht zwangsläufig kreisförmig, sondern kann insbesondere auch eckig oder elliptisch ausgeformt sein. Die Umfangsrichtung des Rohres verläuft (auch im Fall eines Rohres mit einem eckigen Querschnitt) entlang eines gedachten Kreises, welcher den Querschnitt des Rohres senkrecht zur Längserstreckungsrichtung umgibt.

Die Rohrsegmente weisen jeweils eine Wandung auf, die in Umfangsrichtung durch die Schnittenden begrenzt ist, wobei die Wandung in Umfangsrichtung geöffnet ist. Die Wandung ist dabei in Längserstreckungsrichtung durchgehend geöffnet. Dabei ist mit der Umfangsrichtung des Rohrsegments die Umfangsrichtung des zugehörigen wirklichen oder gedachten Rohres gemeint, welches eine geschlossene Wandung aufweist. Das Rohrsegment kann insbesondere durch Schneiden des Rohres gebildet sein, kann aber auch auf andere Weise, insbesondere durch das mechanische Verbinden mehrerer Leisten oder durch ein Extruderverfahren, gebildet sein.

Die Schnittenden des Rohrsegments begrenzen das Rohrsegment in Umfangsrichtung. Die Wandung des Rohrsegments wird also in Umfangsrichtung durch die Schnittenden begrenzt. Der Querschnitt des Rohrsegments ist also durch ein offenes Profil gebildet. Das offene Profil kann insbesondere kreissegmentförmig, z.B. halbkreisförmig, U-förmig oder V-förmig ausgeformt sein.

Die Rohrsegmente weisen weiterhin jeweils zwei Schnittflächen auf, die die Rohrsegmente in Längserstreckungsrichtung begrenzen. Die Schnittflächen verlaufen insbesondere senkrecht zu der Längserstreckungsrichtung.

Gemäß einer Ausführungsform sind die Rohrsegmente jeweils mit einer der Schnittflächen mit der ersten Platte verbunden und/ oder mit der jeweils anderen Schnittfläche mit der zweiten Platte mechanisch verbunden.

Gemäß einer weiteren Ausführungsform sind die Rohrsegmente in Bezug auf ihre Längserstreckungsrichtung senkrecht zu der ersten Platte und der zweiten Platte angeordnet.

Die Verbindungslinie zwischen den Schnittenden verläuft insbesondere entlang der gemeinsamen Richtung der Schnittenden, insbesondere im Querschnitt bezüglich der Längserstreckungsrichtung des Rohrsegments. In Fällen, in denen die Schnittenden im Querschnitt nicht parallel zueinander verlaufen, sei die Verbindungslinie zwischen den Punkten der Schnittflächen mit der größten Erstreckung in Umfangsrichtung definiert.

Die Rohrsegmente bilden jeweils einen Hohlraum aus, der durch die Innenfläche der Wandung begrenzt ist. Dabei entspricht die Segmentbreite (also die Außenbreite des Rohrsegmentes) der Summe der maximalen Erstreckung des Hohlraums in Richtung der Verbindungslinie zwischen den Schnittenden senkrecht zu der Längserstreckungsrichtung (also im Querschnitt) und der doppelten Wandungsstärke. Die Segmenthöhe entspricht der Summe aus der maximalen Erstreckung des Hohlraums senkrecht zu der Segmentbreite und der Wandungsstärke.

Mit dem Begriff 'Aussparung' kann folglich im Zusammenhang der vorliegenden Erfindung entweder der besagte Hohlraum, der von dem Inneren der Rohrsegmente gebildet wird, oder ein Zwischenraum zwischen zwei benachbarten Rohrsegmenten der Schicht gemeint sein. Die Erstreckung des Hohlraums im Inneren der Rohrsegmente ist wie oben beschrieben um das Zweifache der Wandungsstärke kleiner als die Segmentbreite und um eine Wandungsstärke kleiner als die Segmenthöhe und ist somit eine Aussparung im Sinne der Erfindung.

Die wenigstens eine Aussparung weist jeweils eine Erstreckung in Richtung der Palettenbreite und eine Erstreckung in Richtung der Palettentiefe auf. Für den Fall, dass die wenigstens eine Aussparung eine Form aufweist, bei der die Erstreckung in Richtung der Palettenbreite oder der Palettentiefe nicht konstant ist, ist im Zusammenhang der vorliegenden Erfindung mit dem Begriff 'Erstreckung der Aussparung' die minimale Erstreckung in der jeweiligen Richtung gemeint.

Gemäß einer Ausführungsform der Palette weist die wenigstens eine Aussparung in Richtung der Palettenbreite eine Erstreckung auf, die mindestens der Segmentbreite entspricht und die wenigstens eine Aussparung weist in Richtung der Palettentiefe eine Erstreckung auf, die mindestens der Segmenthöhe entspricht.

Die entsprechenden Hohlräume im Innern der Rohrsegmente sind in diesem Fall also in beiden Richtungen (in Richtung der Palettenbreite und in Richtung der Palettentiefe) kleiner als die Aussparung. Hierbei wird eine Aussparung insbesondere durch Weglassen von Rohrsegmenten an bestimmten Positionen der Schicht gebildet.

Gemäß einer weiteren Ausführungsform weist die wenigstens eine Aussparung in Richtung der Palettenbreite eine Erstreckung auf, die geringer als die Segmentbreite ist und die wenigstens eine Aussparung weist in Richtung der Palettentiefe eine Erstreckung auf, die geringer als die Segmenthöhe ist.

In diesem Fall bilden also insbesondere auch die Hohlräume im Innern der Rohrsegmente Aussparungen im Sinne der Erfindung, in die z.B. ein Fuß der Palette eingebracht werden kann.

Gemäß einer weiteren Ausführungsform weist die wenigstens eine Aussparung in Richtung der Palettenbreite eine Erstreckung auf, die mindestens der doppelten Segmentbreite entspricht.

Gemäß einer weiteren Ausführungsform weist die wenigstens eine Aussparung in Richtung der Palettentiefe eine Erstreckung auf, die mindestens der doppelten Segmenthöhe entspricht.

Gemäß einer weiteren Ausführungsform beträgt die Erstreckung der Aussparung in Richtung der Palettenbreite mindestens 50 mm, wobei die Erstreckung in Richtung der Palettentiefe mindestens 30 mm beträgt.

Die Aussparung ist somit ausreichend groß für das Einbringen eines Fußes dimensioniert.

Die wenigstens eine erste Öffnung der ersten Platte weist jeweils eine Erstreckung in Richtung der Palettenbreite und eine Erstreckung in Richtung der Palettentiefe auf. Gemäß einer Ausführungsform weist die wenigstens eine erste Öffnung eine rechteckige Form auf. Für den Fall, dass die wenigstens eine erste Öffnung eine Form aufweist, bei der die Erstreckung in Richtung der Palettenbreite oder der Palettentiefe nicht konstant ist, ist im Zusammenhang der vorliegenden Erfindung mit dem Begriff ,Erstreckung der ersten Öffnung' die minimale Erstreckung in der jeweiligen Richtung gemeint.

Gemäß einer Ausführungsform weist die Palette einen Holzwerkstoff auf oder ist aus einem Holzwerkstoff gebildet. Die erste Platte, die zweite Platte und/oder die Rohrsegmente weisen einen Holzwerkstoff auf oder sind aus einem Holzwerkstoff gebildet. Gemäß einer Ausführungsform weisen die Rohrsegmente einen Holzwerkstoff auf oder sind aus einem Holzwerkstoff gebildet. Gemäß einer weiteren Ausführungsform weist die erste Platte und/oder die zweite Platte einen Holzwerkstoff auf.

Gemäß einer weiteren Ausführungsform ist die erste Platte und/oder die zweite Platte aus einem Holzwerkstoff gebildet.

Der Begriff Holzwerkstoff bezeichnet im Zusammenhang der vorliegenden Erfindung einen Werkstoff, welcher zerkleinertes Holz, insbesondere Holzspäne, Hackschnitzel, Holzfurniere, Holzfurnierstreifen, Holzwolle, Holzfasern oder Holzstäube, oder andere Lignocellulosematerialien aufweist. Weiterhin kann der Holzwerkstoff insbesondere Bindemittel, Klebstoffe und/ oder Additiva aufweisen. Additiva können insbesondere Hydrophobisierungsmittel, Holzschutzmittel, Flammschutzmittel, Härter oder Farbpartikel sein. Zu den Bindemitteln gehören insbesondere Harnstoffleim, Kunstharze, z.B. Phenolharze, Isocyanate, Kunststoffe und/ oder Biokunststoffe. Holzfurniere und/ oder Holzfurnierstreifen dienen dabei insbesondere zur Herstellung von Sperrholz und/ oder Grobspanplatten (OSB-Platten).

Zu den Holzwerkstoffen gehören insbesondere Vollholzwerkstoffe, z.B. Massivholzplatten (gemäß DIN EN 12775) oder Leimholzplatten, Brettsperrholz, Brettschichtholz, Stabsperrholz, und/ oder lamelliertes Holz, Furnierholzwerkstoffe, z.B. Furniersperrholz (FU), Furnierschichtholz, Furnierstreifenholz, Biegesperrholz, Holzspanwerkstoffe, z.B. Flachpressplatten (P2), Strangpressplatten, Spanholzformteile, Grobspanplatten (OSB-Platten, gemäß DIN EN 300) und/ oder Spanstreifenholz (LSL), Holzfaserwerkstoffe, z.B. Holzfaserdämmplatten (HFD), poröse Faserplatten, Soft Boards (SB), mittelharte Faserplatten (MB), harte Faserplatten (HB oder HFH), Hartfaserplatten, extraharte Faserplatten (HFE), mitteldichte Faserplatten (MDF), hochdichte Faserplatten (*high density fiberboards,* HDF) und/ oder ultraleichte Faserplatten (ULDF), Arboform oder Flüssigholz.

Dabei bezeichnet der Begriff Faserplatten die in DIN EN 622 spezifizierten Holzwerkstoffe. Der Begriff Spanplatten bezeichnet die in den Normen DIN EN 309 und DIN EN 312 spezifizierten Holzwerkstoffe. Der Begriff Sperrholz bezeichnet die in den Normen DIN 68708 und DIN EN 313 spezifizierten Holzwerkstoffe.

Holzwerkstoffe haben als Grundmaterial für den Roh- und Innenausbau den Vorteil einer großen Materialfestigkeit und mechanischer Belastbarkeit bei gleichzeitiger Leichtigkeit.

Gemäß einer Ausführungsform weist der Holzwerkstoff einen Ligningehalt von >5%, insbesondere >10% Gewichtsanteil auf. Das bedeutet, dass insbesondere Papier und Pappe keine Holzwerkstoffe im Sinne der vorliegenden Erfindung darstellen, da bei der Papierherstellung z.B. durch chemische Bleichmittel das Lignin der verwendeten Holzrohstoffe weitgehend entfernt wird.

Gemäß einer weiteren Ausführungsform ist der Holzwerkstoff frei von chemischen Bleichmitteln.

Gemäß einer weiteren Ausführungsform ist der Holzwerkstoff in einem Trockenverfahren bei einer Holzfeuchte von < 20 % hergestellt. Dabei bezieht sich die prozentuale Angabe auf das Verhältnis des Wassergewichtes zu der absolut trockenen Holzmasse. Bei einem Trockenverfahren werden die Holzpartikel vor der Fliesbildung und dem Pressen zum Produkt getrocknet und das Produkt weist eine Holzfeuchte von unter 20% auf. Der Leimauftrag kann vor oder nach dem Trocknen erfolgen.

Gemäß einer weiteren Ausführungsform weist der Holzwerkstoff unter Druck und/ oder Hitze verpresste Holzfasern auf. Gemäß einer weiteren Ausführungsform weist der Holzwerkstoff eine Dichte von > 800 kg/m³ auf. Hochdichte Faserplatten weisen beispielsweise eine Dichte in dem genannten Bereich auf.

Gemäß einer weiteren Ausführungsform sind die Rohrsegmente aus einem Material einer hochdichten Faserplatte (HDF) gebildet. Hochdichte Faserplatten (HDF) weisen eine besonders hohe Festigkeit aus.

Gemäß einer weiteren Ausführungsform sind die Rohrsegmente aus einer Mehrzahl von Leisten gebildet. Dabei verlaufen die Leisten in Längserstreckungsrichtung des Rohrsegments. Bei dieser Ausführungsform wird insbesondere ein Rohrsegment mit einem eckigen Querschnitt gebildet.

Gemäß einer Ausführungsform weisen die Leisten einen Holzwerkstoff auf oder sind aus einem Holzwerkstoff gebildet.

Gemäß einer Ausführungsform sind die Rohrsegmente aus gepresstem Holz, insbesondere gepressten Holzfasern oder Holzspänen gefertigt. Z.B. können die Rohrsegmente durch Zerteilen von Rohren aus gepresstem Holz gefertigt werden. Die Herstellung eines solchen Rohrs kann z.B. durch Verpressen einer Holzmasse umfassend zerkleinertes Holz, insbesondere Holzfasern oder Holzspäne, in einen Pressformkanal mit einer rohrförmigen Aussparung und Aushärten der Holzmasse gefertigt werden. Alternativ dazu kann auch ein Halbrohr oder Rohrsegment direkt durch Verpressen einer Holzmasse, insbesondere in einem Pressformkanal mit einer rohrsegmentförmigen Aussparung oder durch ein Flachpresswerkzeug mit einer geeigneten Kontur, gefertigt werden.

Gemäß einer weiteren Ausführungsform ist der Holzwerkstoff mittels eines Extruderverfahrens aus einer Holzmasse, insbesondere einer Dendromasse, hergestellt.

Eine Verwendung von gepresstem Holz erlaubt eine kostengünstige Herstellung von Rohren oder Rohrsegmenten nahezu beliebiger Form und Dimensionierung, wobei eine sehr einheitliche Dimensionierung der Rohre bzw. Rohrsegmente im Vergleich zu Naturprodukten erreicht werden kann.

Gemäß einer weiteren Ausführungsform weisen die Rohrsegmente einen eckigen Querschnitt, insbesondere einen achtecksegmentförmigen Querschnitt, auf.

Durch Rohrsegmente mit achtecksegmentförmigem Querschnitt wird eine besonders vorteilhafte Kraftverteilung bei der Ausübung von Kräften auf den Grundkörper der erfindungsgemäßen Palette erzielt, was eine erhöhte mechanische Stabilität der Palette zur Folge hat.

Gemäß einer weiteren Ausführungsform weisen die Rohrsegmente einen U-förmigen Querschnitt auf.

Gemäß einer weiteren Ausführungsform weisen die Rohrsegmente einen trapezförmigen Querschnitt auf.

Ein trapezförmiger Querschnitt hat den Vorteil der besonders einfachen Herstellung bei gleichzeitig guten Stabilitätseigenschaften.

Gemäß einer weiteren Ausführungsform sind die Rohrsegmente aus einer U-förmig oder trapezsegmentförmig gefalteten Platte, insbesondere einer HDF-Platte gebildet.

Dabei sind die Rohrsegmente insbesondere durch Ausfräsen von V-förmigen Gehrungen in der Platte, Falten der Platte an den Gehrungen und Leimen an den Gehrungen gebildet.

Gemäß einer weiteren Ausführungsform weisen alle Rohrsegmente der Schicht im Wesentlichen eine einheitliche Segmenttiefe auf.

Gemäß einer weiteren Ausführungsform weisen alle Rohrsegmente der Schicht im Wesentlichen eine einheitliche Segmentbreite auf.

Gemäß einer weiteren Ausführungsform weisen alle Rohrsegmente der Schicht im Wesentlichen eine einheitliche Segmenthöhe auf.

Gemäß einer weiteren Ausführungsform ist die wenigstens eine Aussparung in Richtung der Palettenbreite und der Palettentiefe vollständig von Rohrsegmenten umgeben.

Die Schicht weist mehrere in Richtung der Palettenbreite verlaufende Reihe von Rohrsegmenten auf, wobei insbesondere benachbarte Rohrsegmente innerhalb der Reihen mechanisch verbunden sind.

Durch eine mechanische Verbindung benachbarter Rohrsegmente wird die mechanische Stabilität der Palette vorteilhafterweise erhöht.

Gemäß einer weiteren Ausführungsform weist die Schicht wenigstens eine in Richtung der Palettenbreite verlaufende erste Reihe von Rohrsegmenten und wenigstens eine in Richtung der Palettenbreite verlaufende zweite Reihe von Rohrsegmenten auf.

Die Schicht weist wenigstens eine in Richtung der Palettenbreite verlaufende erste Reihe von Rohrsegmenten, wenigstens eine in Richtung der Palettenbreite verlaufende zweite Reihe von Rohrsegmenten und wenigstens eine Leiste auf, wobei die Rohrsegmente der wenigstens einen ersten Reihe und die Rohrsegmente der wenigstens einen zweiten Reihe über die wenigstens eine Leiste mechanisch verbunden sind, wobei insbesondere die Rohrsegmente der wenigstens einen ersten Reihe mittels ihrer Schnittenden mit einer ersten Leistenseite der wenigstens einen Leiste mechanisch verbunden sind, und wobei die Rohrsegmente der wenigstens einen zweiten Reihe mittels ihrer Schnittenden mit einer der ersten Leistenseite gegenüberliegenden zweiten Leistenseite der wenigstens einen Leiste mechanisch verbunden sind.

Durch solche Leisten werden die Rohrsegmente zweier Reihen mechanisch verbunden und somit stabilisiert, was eine Erhöhung der mechanischen Stabilität des Grundkörpers der Palette zur Folge hat.

Gemäß einer weiteren Ausführungsform weist die zweite Platte wenigstens eine zweite Öffnung auf, die mit der wenigstens einen Aussparung zumindest teilweise überlappt.

Das bedeutet insbesondere, dass die wenigstens eine zweite Öffnung dieselben Abmessungen wie die wenigstens eine Aussparung aufweist, wobei die wenigstens eine zweite Öffnung mit der wenigstens einen Aussparung zur Deckung gebracht ist, oder dass die wenigstens eine zweite Öffnung kleiner ist als die wenigstens eine Aussparung, wobei ein Teil der wenigstens einen Aussparung mit der wenigstens einen zweiten Öffnung zur Deckung gebracht ist.

Gemäß einer weiteren Ausführungsform weist die zweite Platte wenigstens eine zweite Öffnung auf, die mit der wenigstens einen Aussparung zumindest teilweise überlappt, wobei die wenigstens eine zweite Öffnung in Richtung der Palettentiefe oder in Richtung der Palettenbreite, insbesondere in Richtung der Palettentiefe eine geringere Erstreckung aufweist als die wenigstens eine erste Aussparung, mit der die wenigstens eine zweite Öffnung überlappt.

Die wenigstens eine zweite Öffnung der zweiten Platte weist jeweils eine Erstreckung in Richtung der Palettenbreite und eine Erstreckung in Richtung der Palettentiefe auf. Gemäß einer Ausführungsform weist die wenigstens eine zweite Öffnung eine rechteckige Form auf. Für den Fall, dass die wenigstens eine zweite Öffnung eine Form aufweist, bei der die Erstreckung in Richtung der Palettenbreite oder der Palettentiefe nicht konstant ist, ist im Zusammenhang der vorliegenden Erfindung mit dem Begriff ,Erstreckung der zweiten Öffnung' die minimale Erstreckung in der jeweiligen Richtung gemeint.

Gemäß einer weiteren Ausführungsform weist die wenigstens eine zweite Öffnung in Richtung der Palettentiefe eine geringere Erstreckung auf als die entsprechende wenigstens eine Aussparung, mit der die wenigstens eine zweite Öffnung überlappt.

Gemäß einer weiteren Ausführungsform weist die wenigstens eine zweite Öffnung in Richtung der Palettenbreite eine geringere Erstreckung auf als die entsprechende wenigstens eine Aussparung, mit der die wenigstens eine zweite Öffnung überlappt.

Eine solche wenigstens eine zweite Öffnung ist an der den Füßen bzw. Kufen entgegengesetzten Seite (also der Oberseite) der Palette angeordnet. Mittels solcher Öffnungen lassen sich insbesondere vorteilhafterweise mehrere Paletten stabil und platzsparend stapeln, indem die Füße einer weiteren erfindungsgemäßen Palette in die zweiten Öffnungen eingebracht werden.

Durch die geringere Erstreckung der zweiten Öffnung in Richtung der Palettentiefe bzw. Palettenbreite entsteht wenigstens ein zusätzlicher Raum zwischen der zweiten Platte und den anliegenden Rohrsegmenten der Schicht der Palette. Dies hat den Vorteil, dass eine zusätzliche Komponente der Palette, z.B. ein Fuß oder ein Klotz einer Kufe, in dem besagten zusätzlichen Raum angeordnet werden kann, insbesondere verkeilt werden kann. Dies erlaubt insbesondere eine besonders einfache mechanische Verbindung zwischen der zusätzlichen Komponente und dem Grundkörper der Palette.

Gemäß einer weiteren Ausführungsform weist die Palette weiterhin wenigstens einen mit dem Grundkörper mechanisch verbundenen Fuß, insbesondere nach dem zweiten Aspekt der Erfindung, auf.

Gemäß einer weiteren Ausführungsform ist der wenigstens eine Fuß aus einem Holzwerkstoff gebildet.

Auf derartigen Füßen lässt sich eine erfindungsgemäße Palette vorteilhafterweise lagern. Zudem lässt sich bei entsprechenden Abständen zwischen den Füßen die erfindungsgemäße Palette als Vierwegpalette nutzen und insbesondere mittels eines Gabelstaplers aufnehmen.

Gemäß einer weiteren Ausführungsform ist der wenigstens eine Fuß, insbesondere zum mechanischen Verbinden des Fußes mit dem Grundkörper, zumindest teilweise in der wenigstens einen Aussparung angeordnet.

Gemäß einer weiteren Ausführungsform weist der wenigstens eine Fuß jeweils wenigstens zwei Stützelemente, insbesondere genau zwei Stützelemente, zum mechanischen Verbinden des wenigstens einen Fußes mit dem Grundkörper und wenigstens ein Verbindungselement, insbesondere genau ein Verbindungselement, auf, wobei die wenigstens zwei Stützelemente mittels des wenigstens einen Verbindungselements, insbesondere jeweils an einer ersten Seite, mechanisch verbunden sind.

Die besagte mechanische Verbindung des Fußes mit dem Grundkörper kann z.B. durch Verklemmen bzw. Verkeilen des Fußes, insbesondere der Stützelemente, in der jeweiligen Aussparung der Schicht erfolgen. Optional kann der Fuß zusätzlich mit Komponenten des Grundkörpers der Palette verleimt werden.

Gemäß einer weiteren Ausführungsform sind die wenigstens zwei Stützelemente und das wenigstens eine Verbindungselement jeweils aus einem Brett aus einem Holzwerkstoff, z.B. aus einer HDF-Platte, gebildet. Insbesondere sind die wenigstens zwei Stützelemente und das wenigstens eine Verbindungselement aus einem einzigen Brett gebildet, wobei das Brett an den Verbindungsflächen (insbesondere ersten Seiten) zwischen den wenigstens zwei Stützelementen und dem wenigstens einen Verbindungselement Gehrungen aufweist.

Gemäß einer weiteren Ausführungsform weisen die wenigstens zwei Stützelemente eine Grundfläche mit einer ersten Seite und einer parallel zu der ersten Seite angeordneten zweiten Seite auf, wobei die wenigstens zwei Stützelemente jeweils über ihre erste Seite mit dem wenigstens einen Verbindungselement mechanisch verbunden sind, und wobei die Länge der ersten Seite die minimale Erstreckung des jeweiligen Stützelements in Richtung der jeweiligen ersten Seite darstellt, und wobei die Länge der zweiten Seite die maximale Erstreckung des jeweiligen Stützelements in Richtung der jeweiligen zweiten Seite darstellt.

Dabei weisen insbesondere die erste Seite und die zweite Seite unterschiedliche Längen auf. Die Grundfläche ist dabei insbesondere von der ersten Seite und der zweiten Seite begrenzt.

Das Stützelement wird also von der zweiten Seite zu der ersten Seite schmaler. Das Verbindungselement des wenigstens einen Fußes bildet die Auflagefläche auf dem Boden, wenn der wenigstens eine Fuß mit dem Grundkörper der Palette verbunden ist und die Palette auf dem wenigstens einen Fuß steht. Eine solche Anordnung hat den Vorteil, dass mit solchen Füßen ausgestattete Paletten auf einfache Weise stapelbar sind, wobei die Füße einer ersten Palette in die zweiten Öffnungen der zweiten Platte einer zweiten Palette einbringbar sind, wenn die erste Palette auf die zweite Palette gestapelt wird.

Gemäß einer Ausführungsform des Fußes weisen die wenigstens zwei Stützelemente eine trapezförmige Grundfläche auf.

Gemäß einer weiteren Ausführungsform des Fußes weisen die wenigstens zwei Stützelemente eine Grundfläche in Form eines gleichschenkligen Trapezes auf.

Eine Trapezform stellt die einfachste Form eines oben beschriebenen Stützelementes dar. In diesem Fall sind die erste und die zweite Seite der Grundfläche durch zwei gerade weitere Seiten miteinander verbunden.

Gemäß einer weiteren Ausführungsform weist das wenigstens eine Verbindungselement eine rechteckförmige Grundfläche auf.

Gemäß einer weiteren Ausführungsform sind die wenigstens zwei Stützelemente gegen das wenigstens eine Verbindungselement um die jeweilige erste Seite des jeweiligen Stützelements drehbar oder klappbar, so dass ein Winkel zwischen der Erstreckungsebene des jeweiligen Stützelements und des wenigstens einen Verbindungselements veränderbar ist, insbesondere so dass bei einer Verkleinerung des Winkels in einem bestimmten Winkelbereich eine mechanische Spannung zwischen dem jeweiligen Stützelement und dem wenigstens einen Verbindungselement entsteht. Dies ist z.B. möglich, wenn das jeweilige Stützelement und das wenigstens eine Verbindungselement aus einem Brett, z.B. einer HDF-Platte, gefertigt sind und an einer entsprechend ausgelegten Gehrung miteinander verbunden sind.

Gemäß einer weiteren Ausführungsform sind die zweiten Seiten der wenigstens zwei Stützelemente mit der zweiten Platte des Grundkörpers mechanisch verbunden.

Gemäß einer weiteren Ausführungsform sind die zweiten Seiten der wenigstens zwei Stützelemente in Richtung der Palettenbreite angeordnet, wobei die zweiten Seiten jeweils eine Länge aufweisen, die höchstens der maximalen Erstreckung, insbesondere im Wesentlichen der maximalen Erstreckung, der wenigstens einen zweiten Öffnung der zweiten Platte in Richtung der Palettenbreite, entspricht. Bei dieser Anordnung ist es vorteilhafterweise möglich, den wenigstens einen Fuß durch die wenigstens eine zweite Öffnung in die wenigstens eine Aussparung der Schicht einzubringen.

Gemäß einer weiteren Ausführungsform ist die Erstreckung in Richtung der Palettentiefe der wenigstens einen zweiten Öffnung geringer als die Erstreckung in Richtung der Palettentiefe der mit der wenigstens einen zweiten Öffnung überlappenden wenigstens einen Aussparung der Schicht. Hierdurch werden zwischen der zweiten Platte und den die entsprechende Aussparung umgebenden Rohrsegmenten bzw. die Innenflächen der Wandung des Rohrsegments, das die Aussparung bildet, Räume gebildet, in welche insbesondere die Stützelemente eines erfindungsgemäßen Fußes einbringbar sind.

Gemäß einer weiteren Ausführungsform sind die zweiten Seiten der wenigstens zwei Verbindungselemente in Richtung der Palettentiefe angeordnet, wobei die die zweiten Seiten jeweils eine Länge aufweisen, die höchstens der Erstreckung, insbesondere im Wesentlichen der Erstreckung, der wenigstens einen zweiten Öffnung der zweiten Platte in Richtung der Palettentiefe, entspricht.

Gemäß einer weiteren Ausführungsform ist die Erstreckung in Richtung der Palettenbreite der wenigstens einen zweiten Öffnung geringer als die Erstreckung in Richtung der Palettenbreite der mit der wenigstens einen zweiten Öffnung überlappenden wenigstens einen Aussparung der Schicht.

Wenn bei einem Einbringen des wenigstens einen Fußes durch die wenigstens eine erste Öffnung der Fuß derart gestaltet ist, dass die wenigstens zwei Stützelemente um das wenigstens eine Verbindungselement faltbar bzw. klappbar sind, und der wenigstens eine Fuß durch die wenigstens eine zweite Öffnung in die wenigstens eine Aussparung eingebracht wird, öffnet sich der Fuß nach dem Durchtreten der wenigstens einen zweiten Öffnung unter Vergrößerung des besagten Winkels und die Stützelemente verlagern sich in Richtung der Palettentiefe (für den Fall, dass die zweiten Seiten der Stützelemente in Richtung der Palettenbreite angeordnet sind) bzw. Palettenbreite (für den Fall, dass die zweiten Seiten der Stützelemente in Richtung der Palettentiefe angeordnet sind).

Ist die Erstreckung der wenigstens einen zweiten Öffnung in Richtung der Palettentiefe bzw. Palettenbreite geringer als die Erstreckung der entsprechenden wenigstens einen Aussparung, die mit der entsprechenden wenigstens einen zweiten Öffnung überlappt, gelangen dabei die Stützelemente jeweils in einen entsprechenden von der zweiten Platte und den die wenigstens eine Aussparung umgebenden Rohrsegmenten gebildeten Raum. Insbesondere bei einer entsprechenden Auslegung des wenigstens einen Fußes und der wenigstens einen Aussparung herrscht dabei in dem Zustand, in dem die Stützelemente in die wenigstens eine Aussparung eingebracht sind, eine mechanische Spannung, durch welche die Stützelemente auf die zweite Platte und die angrenzenden Rohrsegmente, bzw. die Innenflächen der Wandung des die Aussparung bildenden Rohrsegments, eine Kraft ausüben, die vorteilhafterweise eine feste mechanische Verbindung des wenigstens einen Fußes mit dem Grundkörper begünstigt.

Alternativ dazu können die wenigstens eine erste Öffnung und die wenigstens eine zweite Öffnung auch dieselbe Erstreckung in Richtung der Palettenbreite aufweisen. Bei einer entsprechenden Dimensionierung des Fußes ist auch in diesem Fall eine ausreichende mechanische Verankerung des Fußes gegeben.

Gemäß einer weiteren Ausführungsform ist die Erstreckung in Richtung der Palettenbreite der wenigstens einen ersten Öffnung der ersten Platte geringer als die Erstreckung der entsprechenden wenigstens einen Aussparung, mit der die wenigstens eine erste Öffnung überlappt, wobei insbesondere die besagte Erstreckung der wenigstens einen ersten Öffnung derart ausgelegt ist, dass die wenigstens zwei Stützelemente des wenigstens einen Fußes an der Begrenzung der wenigstens einen ersten Öffnung anliegen, wenn der wenigstens eine Fuß in die entsprechende wenigstens eine Aussparung eingebracht ist.

Gemäß einer weiteren Ausführungsform ist die Erstreckung der wenigstens einen ersten Öffnung der ersten Platte in Richtung der Palettentiefe geringer als die Erstreckung der entsprechenden wenigstens einen Aussparung, mit der die wenigstens eine erste Öffnung überlappt, wobei insbesondere die besagte Erstreckung der wenigstens einen ersten Öffnung derart ausgelegt, dass die wenigstens zwei Stützelemente des wenigstens einen Fußes an der Begrenzung der wenigstens einen ersten Öffnung anliegen, wenn der wenigstens eine Fuß in die entsprechende wenigstens eine Aussparung eingebracht ist.

Die beiden letztgenannten Ausführungsformen haben den Vorteil, dass eine stabilere mechanische Verbindung zwischen dem Grundkörper und dem wenigstens einen Fuß ermöglicht wird. Zudem kann der wenigstens eine Fuß aufgrund der mechanischen Verbindung mit der ersten Platte nicht durch die erste Öffnung aus der wenigstens einen Aussparung herausrutschen. Diese Arretierung wird insbesondere durch die von der ersten Seite zu der zweiten Seite breiter werdenden wenigstens zwei Stützelemente bewirkt.

Alternativ dazu können die wenigstens eine erste Öffnung und die wenigstens eine zweite Öffnung auch dieselbe Erstreckung in Richtung der Palettentiefe aufweisen. Bei einer entsprechenden Dimensionierung des Fußes ist auch in diesem Fall eine ausreichende mechanische Verankerung des Fußes gegeben.

Gemäß einer weiteren Ausführungsform weist die Palette wenigstens eine mit dem Grundkörper mechanisch verbundene Kufe, insbesondere nach dem dritten Aspekt der Erfindung, auf.

Gemäß einer weiteren Ausführungsform weist die Kufe einen Holzwerkstoff auf oder ist aus einem Holzwerkstoff gebildet.

Gemäß einer weiteren Ausführungsform weist die Kufe ein parallel zu der ersten Platte angeordnetes Bodenbrett und wenigstens einen mit dem Bodenbrett mechanisch verbundenen Klotz auf.

Gemäß einer weiteren Ausführungsform weist der Klotz einen Holzwerkstoff auf oder ist aus einem Holzwerkstoff gebildet.

Gemäß einer weiteren Ausführungsform ist der wenigstens eine Klotz zumindest teilweise in der wenigstens einen Aussparung angeordnet.

Gemäß einer weiteren Ausführungsform ist der wenigstens eine Klotz mit dem Grundkörper, insbesondere mit der ersten Platte, mechanisch verbunden.

Auf Kufen lässt sich die erfindungsgemäße Palette vorteilhafterweise über den Boden, Transportbahnen und Rollengänge transportieren, insbesondere ziehen, schieben, rollen oder fahren.

Gemäß einer weiteren Ausführungsform ist der wenigstens eine Klotz mit der zweiten Platte mechanisch verbunden, insbesondere mittels einer formschlüssigen Verbindung. Insbesondere ist der wenigstens eine Klotz mit derjenigen Seite der zweiten Platte mechanisch verbunden, die an die jeweilige Aussparung der Schicht angrenzt. Dabei weist die zweite Platte insbesondere keine zweite Öffnung auf, die mit der wenigstens einen Aussparung überlappt. Die zweite Platte ist also in diesem Fall an der Position der jeweiligen Aussparung geschlossen ausgeführt. In diesem Fall begrenzt die zweite Platte die jeweilige Aussparung einseitig.

Gemäß einer weiteren Ausführungsform ist die zweite Platte vollständig geschlossen. Dies bedeutet, dass die zweite Platte in dieser Ausführungsform keine Öffnungen aufweist.

Gemäß einer weiteren Ausführungsform liegt der wenigstens eine Klotz an wenigstens einem Rohrsegment, insbesondere einer Mehrzahl von Rohrsegmenten, der Schicht zumindest teilweise formschlüssig an.

Durch eine solche Anordnung wird der Klotz vorteilhafterweise durch die Rohrsegmente der Schicht gegen auf die Kufe wirkende Scherkräfte stabilisiert.

Gemäß einer weiteren Ausführungsform ist der wenigstens eine Klotz in der Ebene der Palettenbreite und der Palettentiefe vollständig von Rohrsegmenten umgeben. Alternativ dazu liegt der wenigstens eine Klotz an den Innenflächen des die Aussparung bildenden Rohrsegments an.

Ein nicht zur Erfindung gehörender Aspekt betrifft einen Fuß, insbesondere für einen Grundkörper einer Palette nach dem ersten Aspekt der Erfindung, wobei der Fuß wenigstens zwei Stützelemente zum mechanischen Verbinden des Fußes mit dem Grundkörper und wenigstens ein Verbindungselement aufweist, und wobei insbesondere die wenigstens zwei Stützelemente und das wenigstens eine Verbindungselement aus einem Brett aus einem Holzwerkstoff, z.B. einer HDF-Platte, gebildet sind, und wobei die wenigstens zwei Stützelemente eine Grundfläche mit einer ersten Seite und einer parallel zu der ersten Seite angeordneten zweiten Seite aufweisen, wobei die wenigstens zwei Stützelemente jeweils über ihre erste Seite mit dem wenigstens einen Verbindungselement mechanisch verbunden sind, und wobei die Länge der ersten Seite die minimale Erstreckung des jeweiligen Stützelements in Richtung der jeweiligen ersten Seite darstellt, und wobei die Länge der zweiten Seite die maximale Erstreckung des jeweiligen Stützelements in Richtung der jeweiligen zweiten Seite darstellt. Dabei weisen insbesondere die erste Seite und die zweite Seite unterschiedliche Längen auf.

Ein erster Unteraspekt dieses nicht zur Erfindung gehörenden Aspekts betrifft einen Fuß für eine Palette, insbesondere nach dem ersten Aspekt der Erfindung, wobei der Fuß wenigstens zwei Stützelemente, insbesondere zum mechanischen Verbinden des Fußes mit einem Grundkörper der Palette, und wenigstens ein Verbindungselement aufweist, wobei insbesondere die wenigstens zwei Stützelemente und das wenigstens eine Verbindungselement aus einem Brett aus einem Holzwerkstoff gebildet sind, wobei die wenigstens zwei Stützelemente eine Grundfläche mit einer ersten Seite und einer parallel zu der ersten Seite angeordneten zweiten Seite aufweisen, wobei die wenigstens zwei Stützelemente jeweils über ihre erste Seite mit dem wenigstens einen Verbindungselement mechanisch verbunden sind, und wobei die Länge der ersten Seite die minimale Erstreckung des jeweiligen Stützelements in Richtung der jeweiligen ersten Seite darstellt und wobei die Länge der zweiten Seite die maximale Erstreckung des jeweiligen Stützelements in Richtung der jeweiligen zweiten Seite darstellt, wobei der Fuß dazu ausgebildet ist, insbesondere zum mechanischen Verbinden des Fußes mit dem Grundkörper, zumindest teilweise in einer Aussparung des Grundkörpers angeordnet zu werden, wobei insbesondere die zweiten Seiten der Stützelemente dazu ausgebildet sind, mit einer zweiten Platte des Grundkörpers mechanisch verbunden zu werden.

Die besagte mechanische Verbindung des Fußes mit dem Grundkörper kann z.B. durch Verklemmen bzw. Verkeilen der Stützelemente in der jeweiligen Aussparung der Schicht erfolgen. Optional können die Stützelemente zusätzlich mit Komponenten des Grundkörpers der Palette verleimt werden.

Gemäß einer Ausführungsform des Fußes weisen die wenigstens zwei Stützelemente eine trapezförmige Grundfläche auf.

Gemäß einer weiteren Ausführungsform des Fußes weisen die wenigstens zwei Stützelemente eine Grundfläche in Form eines gleichschenkligen Trapezes auf.

Gemäß einer weiteren Ausführungsform weist das wenigstens eine Verbindungselement eine rechteckförmige Grundfläche auf.

Gemäß einer weiteren Ausführungsform sind die wenigstens zwei Stützelemente gegen das wenigstens eine Verbindungselement um die jeweilige erste Seite des jeweiligen Stützelements drehbar oder klappbar, so dass ein Winkel zwischen der Erstreckungsebene des jeweiligen Stützelements und des wenigstens einen Verbindungselements veränderbar ist, so dass insbesondere bei einer Verkleinerung des Winkels eine mechanische Spannung zwischen dem jeweiligen Stützelement und dem wenigstens einen Verbindungselement entsteht. Dies ist z.B. der Fall, wenn das jeweilige Stützelement und das wenigstens eine Verbindungselement aus einem Brett gefertigt sind und an einer entsprechend ausgelegten Gehrung miteinander verbunden sind.

Ein zweiter Aspekt der Erfindung betrifft eine Kufe für eine Palette nach dem ersten Aspekt der Erfindung, wobei die Kufe ein Bodenbrett und wenigstens einen mit dem Bodenbrett mechanisch verbundenen Klotz aufweist, und wobei der wenigstens eine Klotz eine erste Deckplatte, eine zweite Deckplatte und eine zwischen der ersten Deckplatte und der zweiten Deckplatte angeordnete Kernschicht aufweist, wobei die Kernschicht wenigstens eine erste Teilschicht und wenigstens eine zweite Teilschicht aufweist, die jeweils aus einer Mehrzahl von parallel in einer Reihe angeordneten Rohrsegmenten gebildet sind, wobei die Rohrsegmente jeweils eine Wandung und zwei Schnittenden aufweisen, welche die Rohrsegmente in Umfangsrichtung begrenzen. Insbesondere ist der wenigstens eine Klotz mittels der ersten Deckplatte oder der zweiten Deckplatte mit dem Bodenbrett der Kufe mechanisch verbunden. Solche Klötze können in Aussparungen des Grundkörpers einer erfindungsgemäßen Palette eingebracht werden. Insbesondere ist dabei die erste Deckplatte oder die zweite Deckplatte eines jeweiligen Klotzes mit der zweiten Platte des Grundkörpers, insbesondere mit der Seite der zweiten Platte, die an die jeweilige Aussparung angrenzt, mechanisch verbunden. Die Rohrsegmente der ersten Teilschicht sind mittels ihrer Schnittenden mit der ersten Deckplatte mechanisch verbunden und die Rohrsegmente der zweiten Teilschicht sind mittels ihrer Schnittenden mit der zweiten Deckplatte mechanisch verbunden.

Die erfindungsgemäßen Klötze weisen aufgrund der verwendeten Teilschichten aus Rohrsegmenten eine große mechanische Stabilität bei geringem Gewicht auf.

Ein dritter Aspekt der Erfindung betrifft einen Sandwich-Block, insbesondere zur Erzeugung einer Schicht einer Palette nach dem ersten Aspekt der Erfindung, wobei der Sandwich-Block eine Blockbreite, eine senkrecht zu der Blockbreite verlaufende Blocktiefe und eine senkrecht zu der Blockbreite und der Blocktiefe verlaufende Blockhöhe aufweist, und wobei der Sandwich-Block eine Mehrzahl von in Richtung der Blockbreite erstreckten und in Richtung der Blockhöhe gestapelten Lagen, aufweist, wobei die Lage bzw. die Lagen jeweils eine Mehrzahl von Rohrsegmenten aufweisen, wobei der Sandwich-Block wenigstens eine erste Lage, wenigstens eine zweite Lage und wenigstens eine Zwischenplatte aufweist, wobei die wenigstens eine erste Lage und die wenigstens eine zweite Lage jeweils in Richtung der Blockbreite und der Blocktiefe verlaufen und jeweils eine Mehrzahl von Rohrsegmenten aufweisen, wobei die Rohrsegmente der wenigstens einen ersten Lage und die Rohrsegmente der wenigstens einen zweiten Lage über die wenigstens eine Zwischenplatte mechanisch verbunden sind, wobei die Rohrsegmente jeweils zwei Schnittenden aufweisen, welche die Rohrsegmente in Umfangsrichtung begrenzen, und wobei die Rohrsegmente eine Segmenttiefe in Längserstreckungsrichtung des jeweiligen Rohrsegments, eine Segmentbreite entlang einer Verbindunglinie zwischen den Schnittenden senkrecht zu der Längserstreckungsrichtung und eine Segmenthöhe senkrecht zu der Segmenttiefe und der Segmentbreite aufweisen, und wobei die Rohrsegmente derart in den Lagen angeordnet sind, dass die Segmenttiefe der Rohrsegmente in Richtung der Blocktiefe verläuft und dass die Segmentbreite der Rohrsegmente entlang der Blockbreite verläuft, und dass die Segmenthöhe der Rohrsegmente entlang der Blockhöhe verläuft, wobei der Sandwich-Block wenigstens ein in Richtung der Blocktiefe durchgängiges Durchgangsloch aufweist.

Das wenigstens eine Durchgangsloch weist in Richtung der Blockhöhe eine Erstreckung auf, die mindestens der Segmenthöhe der Rohrsegmente entspricht und in Richtung der Blockbreite eine Erstreckung aufweist, die mindestens der Segmentbreite der Rohrsegmente entspricht, wobei insbesondere die Erstreckung des Durchgangslochs in Richtung der Blockhöhe mindestens 50 mm beträgt, wobei die Erstreckung des Durchgangslochs in Richtung der Blockbreite mindestens 30 mm beträgt.

Die erste Platte, die zweite Platte und/oder die Rohrsegmente weisen einen Holzwerkstoff auf oder sind aus einem Holzwerkstoff gebildet.

Ein erster Unteraspekt des dritten Aspekts der Erfindung betrifft einen Sandwich-Block, insbesondere zur Erzeugung einer Schicht einer Palette nach dem ersten Aspekt der Erfindung, wobei der Sandwich-Block eine Blockbreite, eine senkrecht zu der Blockbreite verlaufende Blocktiefe und eine senkrecht zu der Blockbreite und der Blocktiefe verlaufende Blockhöhe aufweist, und wobei der Sandwich-Block mindestens eine in Richtung der Blockbreite erstreckte Lage, insbesondere eine Mehrzahl von in Richtung der Blockbreite erstreckten und in Richtung der Blockhöhe gestapelten Lagen, aufweist, wobei die Lage bzw. die Lagen jeweils eine Mehrzahl von Rohrsegmenten aufweisen, wobei die Rohrsegmente jeweils zwei Schnittenden aufweisen, welche die Rohrsegmente in Umfangsrichtung begrenzen, und wobei die Rohrsegmente eine Segmenttiefe in Längserstreckungsrichtung des jeweiligen Rohrsegments, eine Segmentbreite entlang einer Verbindunglinie zwischen den Schnittenden senkrecht zu der Längserstreckungsrichtung und eine Segmenthöhe senkrecht zu der Segmenttiefe und der Segmentbreite aufweisen, und wobei die Rohrsegmente derart in den Lagen angeordnet sind, dass die Segmenttiefe der Rohrsegmente in Richtung der Blocktiefe verläuft und dass die Segmentbreite der Rohrsegmente entlang der Blockbreite verläuft, und dass die Segmenthöhe der Rohrsegmente entlang der Blockhöhe verläuft, wobei der Sandwich-Block wenigstens ein in Richtung der Blocktiefe durchgängiges Durchgangsloch aufweist, welches in Richtung der Blockhöhe eine Erstreckung aufweist, die mindestens der Segmenthöhe der Rohrsegmente entspricht und in Richtung der Blocktiefe eine Erstreckung aufweist, die mindestens der Segmentbreite der Rohrsegmente entspricht.

Aus einem solchen Sandwich-Block kann durch Zerteilen des Sandwich-Blocks eine Schicht für eine erfindungsgemäße Palette gebildet werden, bei der die wenigstens eine Aussparung in Richtung der Palettenbreite eine Erstreckung aufweist, die mindestens der Segmentbreite entspricht und in Richtung der Palettentiefe eine Erstreckung aufweist, die mindestens der Segmenthöhe entspricht.

Ein zweiter Unteraspekt des dritten Aspekts der Erfindung betrifft einen Sandwich-Block, insbesondere zur Erzeugung einer Schicht einer Palette nach dem ersten Aspekt der Erfindung, wobei der Sandwich-Block eine Blockbreite, eine senkrecht zu der Blockbreite verlaufende Blocktiefe und eine senkrecht zu der Blockbreite und der Blocktiefe verlaufende Blockhöhe aufweist, und wobei der Sandwich-Block mindestens eine in Richtung der Blockbreite erstreckte Lage, insbesondere eine Mehrzahl von in Richtung der Blockbreite erstreckten und in Richtung der Blockhöhe gestapelten Lagen, aufweist, wobei die Lage bzw. die Lagen jeweils eine Mehrzahl von Rohrsegmenten aufweisen, wobei die Rohrsegmente jeweils zwei Schnittenden aufweisen, welche die Rohrsegmente in Umfangsrichtung begrenzen, und wobei die Rohrsegmente eine Segmenttiefe in Längserstreckungsrichtung des jeweiligen Rohrsegments, eine Segmentbreite entlang einer Verbindunglinie zwischen den Schnittenden senkrecht zu der Längserstreckungsrichtung und eine Segmenthöhe senkrecht zu der Segmenttiefe und der Segmentbreite aufweisen, und wobei die Rohrsegmente derart in den Lagen angeordnet sind, dass die Segmenttiefe der Rohrsegmente in Richtung der Blocktiefe verläuft und dass die Segmentbreite der Rohrsegmente entlang der Blockbreite verläuft, und dass die Segmenthöhe der Rohrsegmente entlang der Blockhöhe verläuft, wobei der Sandwich-Block wenigstens ein in Richtung der Blocktiefe durchgängiges Durchgangsloch aufweist, welches in Richtung der Blockhöhe eine Erstreckung aufweist, die geringer als die Segmenthöhe der Rohrsegmente ist und in Richtung der Blocktiefe eine Erstreckung aufweist, die geringer als die Segmentbreite der Rohrsegmente ist.

Aus einem solchen Sandwich-Block kann durch Zerteilen des Sandwich-Blocks eine Schicht für eine erfindungsgemäße Palette gebildet werden, bei der die wenigstens eine Aussparung in Richtung der Palettenbreite eine Erstreckung aufweist, die geringer als die Segmentbreite ist und in Richtung der Palettentiefe eine Erstreckung aufweist, die geringer als die Segmenthöhe ist.

Die Begriffe 'Rohrsegment', 'Segmenttiefe', 'Segmentbreite' und 'Segmenthöhe' sind in der Beschreibung zum ersten Aspekt der Erfindung definiert und werden hier gleichbedeutend verwendet.

Mit dem Begriff 'Durchgangsloch' kann im Zusammenhang der vorliegenden Erfindung der Hohlraum gemeint sein, der von dem Inneren der Rohrsegmente gebildet ist. Die Erstreckung dieses Hohlraums ist wie oben beschrieben um das Zweifache der Wandungsstärke kleiner als die Segmentbreite und um eine Wandungsstärke kleiner als die Segmenthöhe. Somit ist der entsprechende Hohlraum in beiden Richtungen kleiner als das Durchgangsloch. Alternativ dazu kann ein Durchgangsloch im Sinne der Erfindung wird auch durch Weglassen von Rohrsegmenten an bestimmten Positionen bestimmter Lagen des Sandwich-Blocks gebildet sein. Dabei kann das Durchgangsloch durch einen Zwischenraum zwischen zwei benachbarten Rohrsegmenten gebildet sein.

Durch Zerteilen des erfindungsgemäßen Sandwich-Blocks in Richtung der Blockbreite senkrecht zu der Längserstreckungsrichtung der Rohrsegmente, lassen sich vorteilhafterweise auf einfache Weise eine Vielzahl von Schichten für die erfindungsgemäße Palette erzeugen. Dabei entstehen an der Position des wenigstens einen Durchgangsloches Aussparungen der Schicht. Durch Weglassen von Rohrsegmenten lassen sich auf diese Weise Schichten mit Aussparungen verschiedenster Anordnungen bilden.

Gemäß einer weiteren Ausführungsform beträgt die Erstreckung des Durchgangslochs in Richtung der Blockhöhe mindestens 50 mm, wobei die Erstreckung des Durchgangslochs in Richtung der Blockbreite mindestens 30 mm beträgt.

Derart dimensionierte Durchgangslöcher ergeben nach Erzeugen der Schicht der Palette durch Schneiden des Sandwich-Blocks ausreichend groß dimensionierte Aussparungen, in die Füße eingebracht werden können.

Gemäß einer weiteren Ausführungsform weisen alle Rohrsegmente der Lagen im Wesentlichen eine einheitliche Segmenttiefe auf.

Gemäß einer weiteren Ausführungsform weisen alle Rohrsegmente der Lagen im Wesentlichen eine einheitliche Segmentbreite auf.

Gemäß einer weiteren Ausführungsform weisen alle Rohrsegmente der Lagen im Wesentlichen eine einheitliche Segmenthöhe auf.

Gemäß einer Ausführungsform des Sandwich-Blocks sind die Lagen mechanisch miteinander verbunden.

Gemäß einer Ausführungsform des Sandwich-Blocks weist das Durchgangsloch in Richtung der Blockhöhe eine Erstreckung auf, die mindestens der doppelten Segmenthöhe der Rohrsegmente entspricht.

Gemäß einer Ausführungsform des Sandwich-Blocks weist das Durchgangsloch in Richtung der Blockbreite eine Erstreckung auf, die mindestens der doppelten Segmentbreite der Rohrsegmente entspricht.

Der Sandwich-Block weist wenigstens eine erste Lage, wenigstens eine zweite Lage und wenigstens eine Zwischenplatte auf, wobei die wenigstens eine erste Lage und die wenigstens eine zweite Lage jeweils in Richtung der Blockbreite und der Blocktiefe verlaufen und jeweils eine Mehrzahl von Rohrsegmenten aufweisen, wobei die Rohrsegmente der wenigstens einen ersten Lage und die Rohrsegmente der wenigstens einen zweiten Lage über die wenigstens eine Zwischenplatte mechanisch verbunden sind.

In einer Ausführungsform sind insbesondere die Rohrsegmente der wenigstens einen ersten Lage mittels ihrer Schnittenden mit einer ersten Plattenseite der wenigstens einen Zwischenplatte mechanisch verbunden, und die Rohrsegmente der wenigstens einen zweiten Lage sind mittels ihrer Schnittenden mit einer der ersten Plattenseite gegenüberliegenden zweiten Plattenseite der wenigstens einen Zwischenplatte mechanisch verbunden.

Durch das Einfügen wenigstens einer Zwischenplatte zwischen zwei benachbarten Lagen des Sandwich-Blocks lassen sich auf einfache Weise durch Zerteilen des Sandwich-Blocks in Richtung der Blockbreite senkrecht zu der Längserstreckungsrichtung der Rohrsegmente, Schichten mit Leisten bilden, die zwei benachbarte Reihen von Rohrsegmenten mechanisch verbinden, wobei die Leisten durch Zerteilen der wenigstens einen Zwischenplatte erzeugt werden. Dies ermöglicht eine einfache Erzeugung einer besonders stabilen Schicht für eine erfindungsgemäße Palette.

Ein vierter Aspekt der Erfindung betrifft ein Verfahren zur Herstellung einer Palette, insbesondere nach dem ersten Aspekt der Erfindung, wobei das Verfahren zumindest die folgenden Schritte aufweist:
- Bereitstellen eines Sandwich-Blocks nach dem dritten Aspekt der Erfindung,
- Bilden einer Schicht durch Zerteilen des Sandwich-Blocks in Richtung der Blockbreite senkrecht zu der Längserstreckungsrichtung der Rohrsegmente, wobei wenigstens eine Aussparung der Schicht durch einen Abschnitt des wenigstens einen Durchgangslochs gebildet wird,
- Anordnen der Schicht auf einer ersten Platte, die wenigstens eine erste Öffnung aufweist, so dass die wenigstens eine Aussparung der Schicht mit der wenigstens einen ersten Öffnung zumindest teilweise überlappt, und mechanisches Verbinden der Schicht mit der ersten Platte,
- Anordnen einer zweiten Platte auf der Schicht auf einer der ersten Platte gegenüberliegenden Seite parallel zu der ersten Platte und mechanisches Verbinden der zweiten Platte mit der Schicht, wobei der Grundkörper gebildet wird, wobei insbesondere die zweite Platte wenigstens eine zweite Öffnung aufweist, und wobei die zweite Platte derart auf der Schicht angeordnet wird, dass die wenigstens eine zweite Öffnung zumindest teilweise mit der wenigstens einen Aussparung überlappt,
wobei die erste Platte, die zweite Platte und/oder die Rohrsegmente einen Holzwerkstoff aufweisen oder aus einem Holzwerkstoff gebildet sind.

Mittels des beschriebenen Verfahrens lässt sich auf einfache Weise eine Vielzahl von Schichten für eine erfindungsgemäße Palette erzeugen. Dabei müssen die Aussparungen nicht nach Erzeugung der Schichten gebildet werden, sondern ergeben sich bereits durch die Durchgangslöcher des geschnittenen Sandwich-Blocks. Das erfindungsgemäße Verfahren ermöglicht somit eine Herstellung von Schichten für Paletten bei geringeren Herstellkosten und geringer Fertigungszeit.

Gemäß einer Ausführungsform des Verfahrens weist die erste Platte, auf der die Schicht angeordnet wird, wenigstens eine erste Öffnung auf und die Schicht wird derart auf der ersten Platte angeordnet, dass die wenigstens eine Aussparung der Schicht mit der wenigstens einen ersten Öffnung zumindest teilweise überlappt.

Alternativ dazu wird gemäß einer weiteren Ausführungsform nach dem mechanischen Verbinden der Schicht mit der ersten Platte wenigstens eine erste Öffnung in der ersten Platte erzeugt.

Gemäß einer weiteren Ausführungsform wird nach dem mechanischen Verbinden der zweiten Platte mit der Schicht wenigstens eine zweite Öffnung in der zweiten Platte erzeugt.

Dies hat den Vorteil, dass die Dimensionierung der Öffnungen der ersten und/ oder zweiten Platte beliebig an verschiedene Anordnungen der Aussparungen der Kernschicht angepasst werden können.

Gemäß einer Ausführungsform des Verfahrens wird weiterhin durch die wenigstens eine Öffnung der ersten Platte wenigstens ein Fuß, insbesondere nach dem zweiten Aspekt der Erfindung, oder wenigstens ein Klotz einer Kufe, insbesondere nach dem dritten Aspekt der Erfindung, in die wenigstens eine Aussparung eingebracht, die mit der wenigstens einen ersten Öffnung überlappt, wobei insbesondere der wenigstens eine Fuß oder der wenigstens eine Klotz mit dem Grundkörper mechanisch verbunden wird. Dabei wird insbesondere der wenigstens eine Fuß oder der wenigstens eine Klotz mit der zweiten Platte des Grundkörpers mechanisch verbunden.

Gemäß einer weiteren Ausführungsform des Verfahrens wird weiterhin durch die wenigstens eine zweite Öffnung der zweiten Platte wenigstens ein Fuß, insbesondere nach dem zweiten Aspekt der Erfindung, in die wenigstens eine Aussparung eingebracht, die mit der wenigstens einen zweiten Öffnung überlappt, wobei insbesondere der wenigstens eine Fuß mit dem Grundkörper mechanisch verbunden wird.

Gemäß einer weiteren Ausführungsform des Verfahrens wird wenigstens ein Fuß, insbesondere nach dem nicht zur Erfindung gehörenden Aspekt, oder wenigstens ein Klotz einer Kufe, insbesondere nach dem zweiten Aspekt der Erfindung, mit dem Grundkörper der Palette, insbesondere mit der ersten Platte, mechanisch verbunden.

Ein fünfter Aspekt der Erfindung betrifft ein weiteres Verfahren zur Herstellung einer Palette, insbesondere nach dem ersten Aspekt der Erfindung, wobei das Verfahren zumindest die folgenden Schritte aufweist:
- Bereitstellen eines Sandwich-Blocks, wobei der Sandwich-Block eine Blockbreite, eine senkrecht zu der Blockbreite verlaufende Blocktiefe und eine senkrecht zu der Blockbreite und der Blocktiefe verlaufende Blockhöhe aufweist, und wobei der Sandwich-Block eine Mehrzahl von in Richtung der Blockbreite erstreckten und in Richtung der Blockhöhe gestapelten Lagen aufweist, wobei die Lagen jeweils eine Mehrzahl von Rohrsegmenten aufweisen, wobei die Rohrsegmente jeweils zwei Schnittenden aufweisen, welche die Rohrsegmente in Umfangsrichtung begrenzen, und wobei die Rohrsegmente eine Segmenttiefe in Längserstreckungsrichtung des jeweiligen Rohrsegments, eine Segmentbreite entlang einer Verbindunglinie zwischen den Schnittenden senkrecht zu der Längserstreckungsrichtung und eine Segmenthöhe senkrecht zu der Segmenttiefe und der Segmentbreite aufweisen, und wobei die Rohrsegmente derart in den Lagen angeordnet sind, dass die Segmenttiefe der Rohrsegmente in Richtung der Blocktiefe verläuft und dass die Segmentbreite entlang der Blockbreite verläuft, und dass die Segmenthöhe der Rohrsegmente in Richtung der Blockhöhe verläuft,
- Bilden einer Schicht durch Zerteilen des Sandwich-Blocks in Richtung der Blockbreite senkrecht zu der Längserstreckungsrichtung der Rohrsegmente,
- Erzeugen wenigstens einer in Richtung der Palettenhöhe durchgängigen Aussparung in der Schicht,
- Anordnen der Schicht auf einer ersten Platte, und mechanisches Verbinden der Schicht mit der ersten Platte,
- Anordnen einer zweiten Platte auf der Schicht auf einer der ersten Platte gegenüberliegenden Seite parallel zu der ersten Platte und mechanisches Verbinden der zweiten Platte mit der Schicht, wobei der Grundkörper gebildet wird.

Ein solches Verfahren hat den Vorteil, dass die Aussparungen in diesem Fall nicht durch das Weglassen von Rohrsegmenten in der Schicht oder in dem Sandwich-Block gebildet werden, so dass die Dimensionen der Aussparungen (z.B. für Spezialanfertigungen geringerer Stückzahl) frei wählbar sind.

Ein erster Unteraspekt des fünften Aspekts betrifft ein Verfahren zur Herstellung einer Palette, insbesondere nach dem ersten Aspekt der Erfindung, wobei das Verfahren zumindest die folgenden Schritte aufweist:
- Bereitstellen eines Sandwich-Blocks, wobei der Sandwich-Block eine Blockbreite, eine senkrecht zu der Blockbreite verlaufende Blocktiefe und eine senkrecht zu der Blockbreite und der Blocktiefe verlaufende Blockhöhe aufweist, und wobei der Sandwich-Block eine Mehrzahl von in Richtung der Blockbreite erstreckten und in Richtung der Blockhöhe gestapelten Lagen aufweist, wobei die Lagen jeweils eine Mehrzahl von Rohrsegmenten aufweisen, wobei die Rohrsegmente jeweils zwei Schnittenden aufweisen, welche die Rohrsegmente in Umfangsrichtung begrenzen, und wobei die Rohrsegmente eine Segmenttiefe in Längserstreckungsrichtung des jeweiligen Rohrsegments, eine Segmentbreite entlang einer Verbindunglinie zwischen den Schnittenden senkrecht zu der Längserstreckungsrichtung und eine Segmenthöhe senkrecht zu der Segmenttiefe und der Segmentbreite aufweisen, und wobei die Rohrsegmente derart in den Lagen angeordnet sind, dass die Segmenttiefe der Rohrsegmente in Richtung der Blocktiefe verläuft und dass die Segmentbreite entlang der Blockbreite verläuft, und dass die Segmenthöhe der Rohrsegmente in Richtung der Blockhöhe verläuft,
- Bilden einer Schicht durch Zerteilen des Sandwich-Blocks in Richtung der Blockbreite senkrecht zu der Längserstreckungsrichtung der Rohrsegmente,
- Erzeugen wenigstens einer in Richtung der Palettenhöhe durchgängigen Aussparung in der Schicht, wobei die wenigstens eine Aussparung in Richtung der Palettenbreite eine Erstreckung aufweist, die mindestens der Segmentbreite entspricht, und in Richtung der Palettentiefe eine Erstreckung aufweist, die mindestens der Segmenthöhe entspricht,
- Anordnen der Schicht auf einer ersten Platte, und mechanisches Verbinden der Schicht mit der ersten Platte,
- Anordnen einer zweiten Platte auf der Schicht auf einer der ersten Platte gegenüberliegenden Seite parallel zu der ersten Platte und mechanisches Verbinden der zweiten Platte mit der Schicht, wobei der Grundkörper gebildet wird.

Ein zweiter Unteraspekt des fünften Aspekts betrifft ein Verfahren zur Herstellung einer Palette, insbesondere nach dem ersten Aspekt der Erfindung, wobei das Verfahren zumindest die folgenden Schritte aufweist:
- Bereitstellen eines Sandwich-Blocks, wobei der Sandwich-Block eine Blockbreite, eine senkrecht zu der Blockbreite verlaufende Blocktiefe und eine senkrecht zu der Blockbreite und der Blocktiefe verlaufende Blockhöhe aufweist, und wobei der Sandwich-Block eine Mehrzahl von in Richtung der Blockbreite erstreckten und in Richtung der Blockhöhe gestapelten Lagen aufweist, wobei die Lagen jeweils eine Mehrzahl von Rohrsegmenten aufweisen, wobei die Rohrsegmente jeweils zwei Schnittenden aufweisen, welche die Rohrsegmente in Umfangsrichtung begrenzen, und wobei die Rohrsegmente eine Segmenttiefe in Längserstreckungsrichtung des jeweiligen Rohrsegments, eine Segmentbreite entlang einer Verbindunglinie zwischen den Schnittenden senkrecht zu der Längserstreckungsrichtung und eine Segmenthöhe senkrecht zu der Segmenttiefe und der Segmentbreite aufweisen, und wobei die Rohrsegmente derart in den Lagen angeordnet sind, dass die Segmenttiefe der Rohrsegmente in Richtung der Blocktiefe verläuft und dass die Segmentbreite entlang der Blockbreite verläuft, und dass die Segmenthöhe der Rohrsegmente in Richtung der Blockhöhe verläuft,
- Bilden einer Schicht durch Zerteilen des Sandwich-Blocks in Richtung der Blockbreite senkrecht zu der Längserstreckungsrichtung der Rohrsegmente,
- Erzeugen wenigstens einer in Richtung der Palettenhöhe durchgängigen Aussparung in der Schicht, wobei die wenigstens eine Aussparung in Richtung der Palettenbreite eine Erstreckung aufweist, die geringer als die Segmentbreite ist, und in Richtung der Palettentiefe eine Erstreckung aufweist, die geringer als die Segmenthöhe ist,
- Anordnen der Schicht auf einer ersten Platte, und mechanisches Verbinden der Schicht mit der ersten Platte,
- Anordnen einer zweiten Platte auf der Schicht auf einer der ersten Platte gegenüberliegenden Seite parallel zu der ersten Platte und mechanisches Verbinden der zweiten Platte mit der Schicht, wobei der Grundkörper gebildet wird. Die wenigstens eine Aussparung kann dabei z.B. mittels Sägen oder Fräsen gebildet werden.

Bei dem beschriebenen Verfahren kann auch ein Sandwich-Block verwendet werden, der kein in Richtung der Blocktiefe durchgängiges Durchgangsloch aufweist, welches in Richtung der Blockhöhe eine Erstreckung aufweist, die mindestens der Segmenthöhe der Rohrsegmente entspricht und in Richtung der Blockbreite eine Erstreckung aufweist, die mindestens der Segmentbreite der Rohrsegmente entspricht. Es handelt sich in diesem Fall also nicht um einen erfindungsgemäßen Sandwich-Block.

Gemäß einer Ausführungsform des Verfahrens wird die wenigstens eine Aussparung vor dem Anordnen der Schicht auf der ersten Platte erzeugt.

Gemäß einer weiteren Ausführungsform des Verfahrens wird die wenigstens eine Aussparung nach dem Anordnen der Schicht auf der ersten Platte erzeugt, wobei insbesondere wenigstens eine erste Öffnung der ersten Platte in einem Schritt mit der wenigstens einen Aussparung der Schicht erzeugt wird, so dass die wenigstens eine Aussparung und die wenigstens eine erste Öffnung zumindest teilweise überlappen.

Gemäß einer weiteren Ausführungsform des Verfahrens wird die wenigstens eine Aussparung nach dem Anordnen der zweiten Platte auf der Schicht erzeugt, wobei insbesondere wenigstens eine zweite Öffnung der zweiten Platte in einem Schritt mit der wenigstens einen Aussparung der Schicht erzeugt wird, so dass die wenigstens eine Aussparung und die wenigstens eine zweite Öffnung zumindest teilweise überlappen.

Hierbei werden die wenigstens eine Aussparung und die wenigstens eine erste Öffnung bzw. zweite Öffnung z.B. gemeinsam ausgesägt oder ausgefräst.

Weitere Einzelheiten und Vorteile der Erfindung werden durch die nachfolgende Beschreibung von Ausführungsbeispielen an Hand von Figuren erläutert. Es zeigen:
- Fig. 1: eine schematische Darstellung eines Rohrsegments;
- Fig. 2: eine schematische Darstellung einer Schicht einer erfindungsgemäßen Palette;
- Fig. 3: eine schematische Darstellung einer ersten Platte einer erfindungsgemäßen Palette;
- Fig. 4: schematische Darstellungen einer erfindungsgemäßen Palette mit Füßen;
- Fig. 5: schematische Darstellungen einer erfindungsgemäßen Palette mit Kufen;
- Fig. 6: eine schematische Darstellung eines erfindungsgemäßen Sandwich-Blocks;
- Fig. 7: schematische Darstellungen von erfindungsgemäßen Füßen;
- Fig. 8: schematische Darstellungen von Klötzen einer erfindungsgemäßen Kufe.

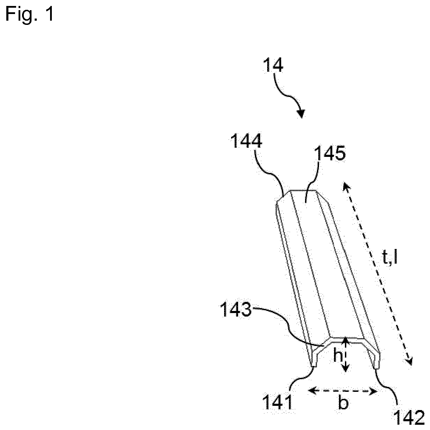

Im Einzelnen zeigt die Figur 1 ein Rohrsegment 14, das entlang einer Längserstreckungsrichtung I erstreckt ist und eine Wandung 145 sowie zwei die Wandung 145 in Umfangsrichtung des Rohrsegments 14 begrenzende Schnittenden 141,142 aufweist. Weiterhin weist das Rohrsegment 14 zwei Schnittflächen 143, 144 auf, die das Rohrsegment 14 in Längserstreckungsrichtung I begrenzen.

Das Rohrsegment 14 weist eine Segmenttiefe t in Richtung der Längserstreckungsrichtung I, eine Segmentbreite b, die der maximalen Erstreckung in der Richtung einer Verbindungslinie zwischen den Schnittenden 141,142 entspricht, und eine Segmenthöhe h auf, die der maximalen Erstreckung in der dritten Raumrichtung senkrecht zu der Segmentbreite b und der Segmenttiefe t entspricht.

In der hier gezeigten Ausführungsform weist das Rohrsegment 14 quer zu der Längserstreckungsrichtung I einen achtecksegmentförmigen Querschnitt auf. Das Rohrsegment 14 ist aus fünf entlang der Längserstreckungsrichtung I verlaufenden Leisten zusammengesetzt, die jeweils zu der oder den benachbarten Leisten einen Winkel von 45° aufweisen.

Alternativ zu der in der Figur 1 gezeigten Ausführungsform kann das Rohrsegment 14 auch einen anders geformten Querschnitt, insbesondere einen kreissegmentförmigen, z.B. halbkreisförmigen, trapezsegmentförmigen oder U-förmigen Querschnitt, aufweisen.

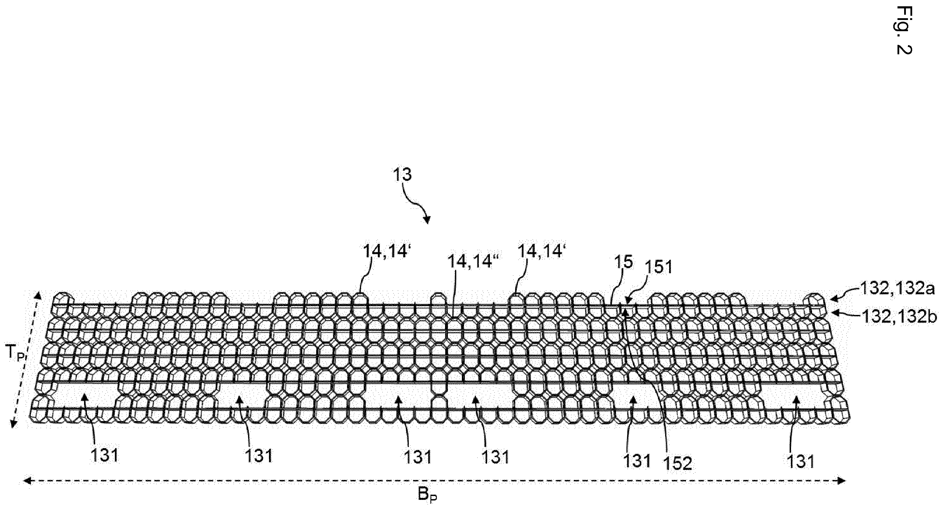

Die Figur 2 zeigt eine Schicht 13 einer erfindungsgemäßen Palette 1, die aus Rohrsegmenten 14 und Leisten 15 zusammengesetzt ist. Die Rohrsegmente 14 sind in Richtung der Palettenbreite B_{P} in einer Mehrzahl von Reihen 132 angeordnet, wobei die Reihen 132 in Richtung der Palettentiefe T_{P} übereinander geschichtet sind. Die Rohrsegmente 14 sind derart positioniert, dass die Segmentbreiten b in Richtung der Palettenbreite B_{P} verlaufen und die Segmenthöhen h in Richtung der Palettentiefe T_{P} verlaufen. Die Segmenttiefen t verlaufen in der nicht dargestellten dritten Raumrichtung. Dabei sind die Bezeichnungen der Segmentbreite b, Segmenthöhe h und Segmenttiefe t entsprechend der Darstellung des Rohrsegments 14 in Figur 1 zu entnehmen.

Jeweils eine erste Reihe 132a und eine zweite Reihe 132b sind mit einer entsprechenden Leiste 15 mechanisch verbunden, wobei die Schnittenden 141,142 (siehe Fig. 1) der Rohrsegmente 14' der ersten Reihe 132a mit einer ersten Leistenseite 151 der Leiste 15 mechanisch verbunden sind, und wobei die Rohrsegmente 14" der zweiten Reihe 132b mit einer der ersten Leistenseite 151 gegenüberliegenden zweiten Leistenseite 152 der Leiste 15 mechanisch verbunden sind. Dabei sind die Rohrsegmente 14' der ersten Reihe 132a in Bezug auf die Rohrsegmente 14" der zweiten Reihe 132b um 180° um eine Achse gedreht, die entlang der Längserstreckungsrichtung I verläuft. Die Rohrsegmente 14" der zweiten Reihe 132b sind mit den Rohrsegmenten 14 einer benachbarten Reihe 132 mechanisch verbunden, wobei die Wandungen 145 (siehe Fig. 1) der Rohrsegmente 14" der zweiten Reihe 132b mit den Wandungen 145 der Rohrsegmente 14 der benachbarten Reihe 132 verbunden sind.

Die Schicht 13 weist eine Mehrzahl von Aussparungen 131 auf, die jeweils durch Weglassen von Rohrsegmenten 14 gebildet sind. Die hier gezeigten Aussparungen 131 sind durch Weglassen von drei oder vier Rohrsegmenten 14 in Richtung der Palettenbreite B_{P} und zwei Rohrsegmenten 14 in Richtung der Palettentiefe T_{P} gebildet. Dementsprechend weisen die Aussparungen 131 jeweils in Richtung der Palettenbreite B_{P} eine Erstreckung von drei oder vier Segmentbreiten b und in Richtung der Palettentiefe T_{P} eine Erstreckung von zwei Segmenthöhen h auf.

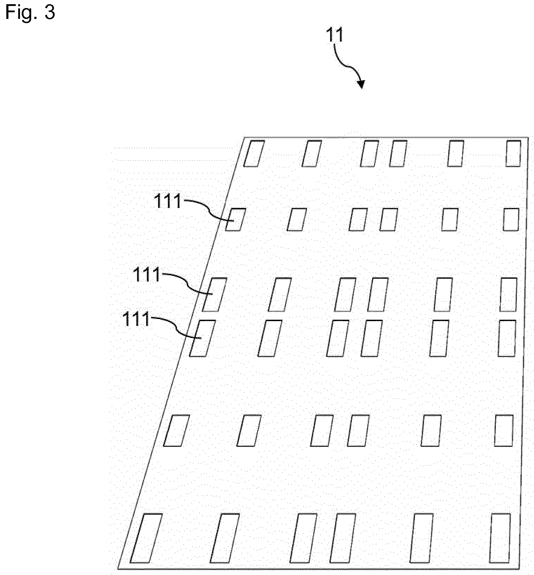

Die Figur 3 zeigt eine erste Platte 11 für eine erfindungsgemäße Palette 1. Die erste Platte 11 weist eine Mehrzahl von ersten Öffnungen 111 auf, die derart angeordnet sind, dass sie mit den Aussparungen 131 einer Schicht 13 der Palette 1 zumindest teilweise zur Deckung gebracht werden können. Bei Ausführungsformen der Palette 1, bei denen die zweite Platte 12 zweite Öffnungen 121 aufweist, kann die zweite Platte 12 analog zu der hier gezeigten ersten Platte 11 ausgeführt sein.

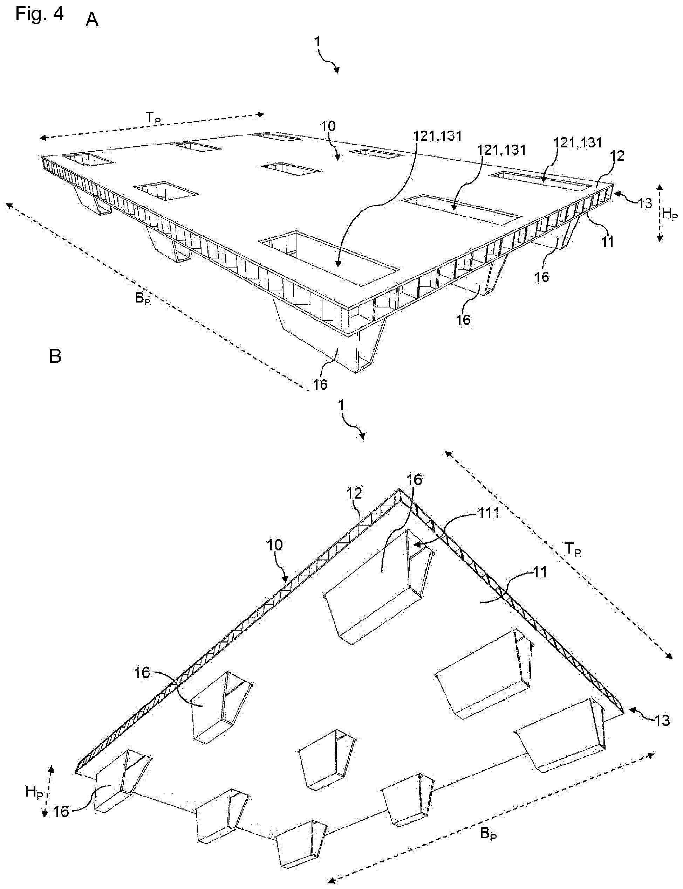

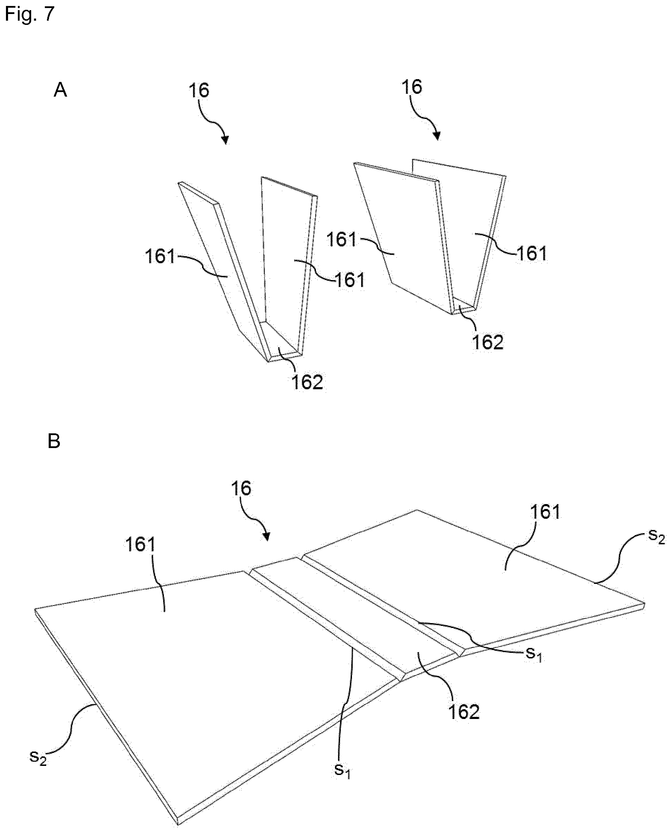

Die Figur 4A zeigt eine erfindungsgemäße Palette 1 in einer Ausführungsform mit Füßen 16 in einer perspektivischen Ansicht von der Oberseite der Palette 1. Die Palette 1 weist eine Schicht 13 auf, die zwischen einer ersten Platte 11 und einer zweiten Platte 12 angeordnet ist. Die Schicht 13 ist analog zu der in Figur 2 gezeigten Schicht 13 aufgebaut. Die Segmenttiefen t der Rohrsegmente 14 der Schicht 13 verlaufen in Richtung einer Palettenhöhe H_{P}. Weiterhin sind Aussparungen 131 der Schicht 13 gezeigt, welche mit zweiten Öffnungen 121 der zweiten Platte 12 überlappen. Dabei sind die zweiten Öffnungen 121 in Richtung der Palettentiefe T_{P} schmaler ausgelegt als die Erstreckung der entsprechenden Aussparungen 131 in Richtung der Palettentiefe T_{P}. Dadurch sind die Stützelemente 161 der Füße 16 (siehe Figur 7) in entsprechenden Zwischenräumen zwischen der zweiten Platte 12 und den an die entsprechende Aussparung 131 angrenzenden Rohrsegmenten 14 angeordnet. In die nach oben hin offenen Aussparungen 131 können beispielsweise beim Stapeln mehrerer erfindungsgemäßer Paletten 1 die Füße 16 einer weiteren Palette 1 eingebracht werden, was ein platzsparendes Stapeln erlaubt.

Die Figur 4B zeigt eine perspektivische Ansicht der Unterseite der in Figur 4A gezeigten Palette 1. In dieser Ansicht sind erste Öffnungen 111 der ersten Platte 11 dargestellt, in welche die Füße 16 eingebracht sind.

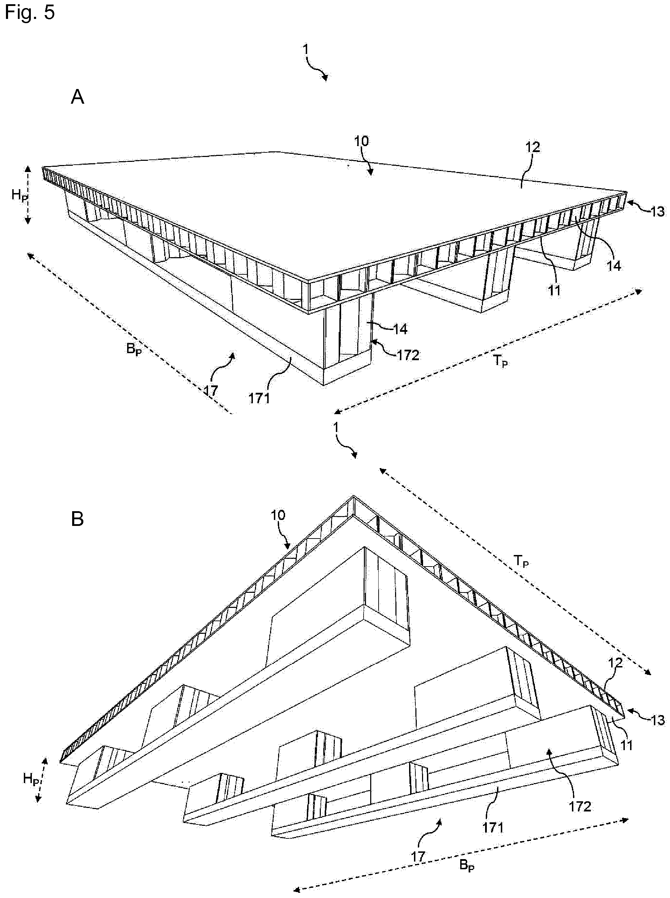

Die Figuren 5A und 5B zeigen eine erfindungsgemäße Palette 1 in einer Ausführungsform mit Kufen 17 in einer perspektivischen Ansicht, wobei in der Figur 5A eine Ansicht von der Oberseite und in der Figur 5B eine Ansicht von der Unterseite der Palette 1 dargestellt ist. Die Schicht 13 ist dabei analog zu der in Figur 2 gezeigten Schicht 13 aufgebaut.

Die Kufen 17 weisen jeweils ein Bodenbrett 171 auf, das mit drei Klötzen 172 mechanisch verbunden ist. Die Klötze 172 sind dabei in die hier nicht dargestellten (verdeckten) ersten Öffnungen 111 der ersten Platte 11 eingebracht.

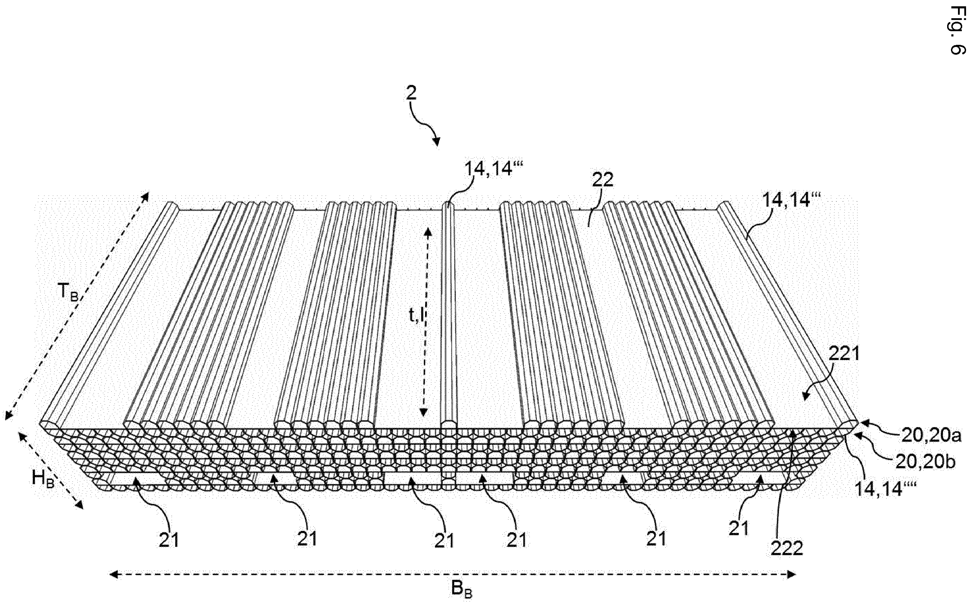

Die Figur 6 zeigt einen Sandwich-Block 2 mit einer Blockbreite B_{B}, einer Blocktiefe T_{B} und einer Blockhöhe H_{B}.

Der Sandwich-Block 2 weist eine Mehrzahl von Lagen 20 von Rohrsegmenten 14 auf, wobei die Lagen in Richtung der Blockhöhe H_{B} übereinander gestapelt sind. Die Rohrsegmente 14 sind dabei so positioniert, dass die Längserstreckungsrichtung I der Rohrsegmente 14 bzw. die Segmenttiefe t in Richtung der Blocktiefe T_{B} verläuft und die Segmentbreite b in Richtung der Blockbreite B_{B} verläuft.

Jeweils eine erste Lage 20a und eine zweite Lage 20b sind mit einer entsprechenden Zwischenplatte 22 mechanisch verbunden, wobei die Schnittenden 141,142 (siehe Fig. 1) der Rohrsegmente 14‴ der ersten Lage 20a mit einer ersten Plattenseite 221 der Zwischenplatte 22 mechanisch verbunden sind, und wobei die Rohrsegmente 14ʺʺ der zweiten Lage 20b mit einer der ersten Plattenseite 221 gegenüberliegenden zweiten Plattenseite 222 der Zwischenplatte 22 mechanisch verbunden sind. Dabei sind die Rohrsegmente 14‴ der ersten Lage 20a in Bezug auf die Rohrsegmente 14ʺʺ der zweiten Lage 20b um 180° um eine Achse gedreht, die entlang der Längserstreckungsrichtung I verläuft. Die Rohrsegmente 14ʺʺ der zweiten Lage 20b sind mit den Rohrsegmenten 14 einer benachbarten Lage 20 mechanisch verbunden, wobei die Wandungen 145 (siehe Fig. 1) der Rohrsegmente 14ʺʺ der zweiten Lage 20b mit den Wandungen 145 der Rohrsegmente 14 der benachbarten Lage 20 verbunden sind.

Der Sandwich-Block 2 weist eine Mehrzahl von in Richtung der Palettentiefe T_{P} durchgängiger Durchgangslöcher 21 auf, die jeweils durch Weglassen von Rohrsegmenten 14 gebildet sind. Die hier gezeigten Durchgangslöcher 21 sind durch Weglassen von drei oder vier Rohrsegmenten 14 in einer Lage 20 gebildet, wobei die Rohrsegmente 14 an entsprechenden Positionen jeweils zwei benachbarter übereinandergeschichteter Lagen 20 weggelassen sind. Dadurch ergeben sich Durchgangslöcher 21 einer Erstreckung von drei oder vier Segmentbreiten b in Richtung der Blockbreite B_{B} und zwei Segmenthöhen h in Richtung der Blockhöhe H_{B}.

Durch Zerteilen des hier dargestellten Sandwich-Blocks 2 quer zu der Längserstreckungsrichtung I der Rohrsegmente 14, also in einer Ebene, die zwischen der Blockbreite B_{B} und der Blockhöhe H_{B} verläuft, lässt sich eine Schicht 13 für eine erfindungsgemäße Palette 1 erzeugen. Eine derartige Schicht 13 ist in der Figur 2 gezeigt. Insbesondere wird also eine Scheibe von dem Sandwich-Block 2 abgeschnitten, wobei die Schicht 13 durch die Scheibe gebildet ist. Bei dem Zerteilen werden neue Schnittflächen 143,144 (siehe Fig. 1) der Rohrsegmente 14 gebildet. Die Palettenbreite B_{P} einer mittels der erzeugten Schicht 13 gebildeten Palette 1 entspricht dabei der Blockbreite B_{B}, die Palettentiefe T_{P} entspricht der Blockhöhe H_{B} und die Palettenhöhe H_{P} ist beim Zerteilen frei wählbar und wird insbesondere durch die Dicke einer von dem Sandwich-Block 2 abgeschnittenen Scheibe definiert.

Die Figur 7A zeigt zwei perspektivische Ansichten eines Fußes 16 für eine erfindungsgemäße Palette 1 in einer gefalteten Form. Der Fuß 16 weist zwei Stützelemente 161 und ein Verbindungselement 162 auf, das die Stützelemente 161 mechanisch verbindet. Die Figur 7B zeigt den Fuß 16 in einer ungefalteten Form. In der hier gezeigten Ausführungsform ist der Fuß 16 aus Platten eines Holzwerkstoffs gebildet, wobei die Stützelemente 161 und das Verbindungselement 162 aus einer einzigen Platte gebildet sein können, die in Figur 7B gezeigte gesägte oder gefräste Gehrungen zwischen den Stützelementen 161 und dem Verbindungselement 162 aufweist. Die Stützelemente 161 sind in der hier gezeigten Ausführungsform trapezförmig und weisen zwei parallele Seiten s₁,s₂ auf, wobei die erste Seite s₁ kürzer ist als die zweite Seite s₂. Die ersten Seiten s₁ sind mit dem Verbindungselement 162 mechanisch verbunden.

Wird der Fuß 16 wie in Figur 7A gezeigt gefaltet bzw. geklappt, lässt sich durch Aufbringen einer Kraft eine Vorspannung des Fußes 16 erzeugen, so dass insbesondere der Fuß 16 unter der Vorspannung durch die wenigstens eine zweite Öffnung 121 der zweiten Platte 12 in die Aussparung 131 einbringbar ist. Beim Lösen der Vorspannung öffnet sich der Fuß 16 zumindest teilweise, so dass die Stützelemente 161 eine formschlüssige Verbindung mit der Innenseite der zweiten Platte 12 bzw. mit den Rohrsegmenten 14 der Schicht 13 eingehen.

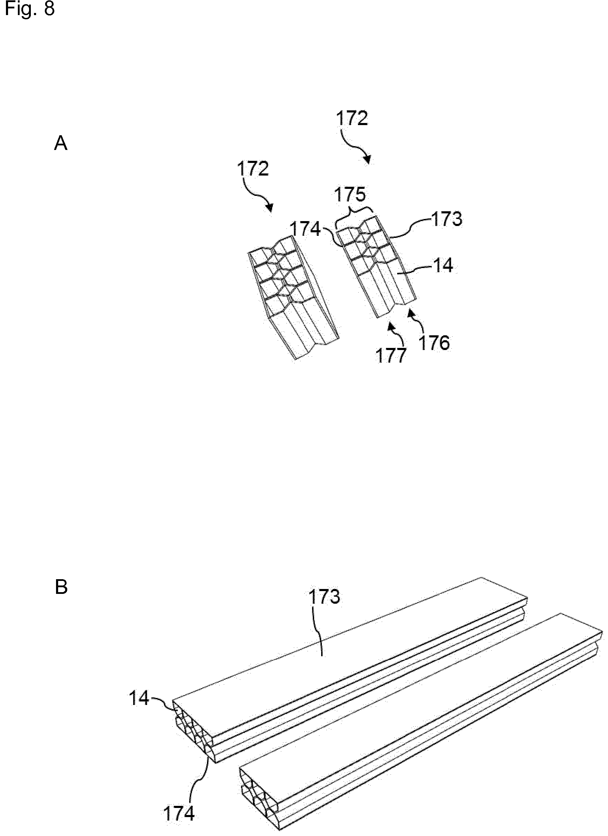

Die Figur 8A zeigt zwei Ausführungsformen eines erfindungsgemäßen Klotzes 172 für eine Kufe 17 einer erfindungsgemäßen Palette 1 und die Figur 8B zeigt ein Zwischenprodukt, aus dem durch Zerteilen mehrere Klötze 172 herstellbar sind.

Die Klötze weisen eine erste Deckplatte 173, eine zweite Deckplatte 174 und eine zwischen den Deckplatten 173,174 angeordnete Kernschicht 175 auf, die eine erste Teilschicht 176 und eine zweite Teilschicht 177 aus Rohrsegmenten 14 aufweist. Die Rohrsegmente 14 der ersten Teilschicht 176 sind mittels ihrer Schnittenden 141,142 (siehe Fig. 1) mit der ersten Deckplatte 173 mechanisch verbunden und die Rohrsegmente 14 der zweiten Teilschicht 177 sind mittels ihrer Schnittenden 141,142 mit der zweiten Deckplatte 174 mechanisch verbunden. Die erste und die zweite Teilschicht 176,177 sind über die Wandungen 145 (siehe Fig. 1) der Rohrsegmente 14 mechanisch verbunden. Die gezeigten Ausführungsformen weisen jeweils drei bzw. vier parallel angeordnete Rohrsegmente 14 pro Teilschicht 176,177 auf.

### Bezugszeichenliste

- 1: Palette
- 10: Grundkörper
- 11: Erste Platte
- 111: Erste Öffnung
- 12: Zweite Platte
- 121: Zweite Öffnung
- 13: Schicht
- 131: Aussparung
- 132: Reihe
- 132a: Erste Reihe
- 132b: Zweite Reihe
- 14,14',14",14‴,14ʺʺ: Rohrsegment
- 141,142: Schnittenden
- 143,144: Schnittflächen
- 145: Wandung
- 15: Leiste
- 151: Erste Leistenseite
- 152: Zweite Leistenseite
- 16: Fuß
- 161: Stützelement
- 162: Verbindungselement
- 17: Kufe
- 171: Bodenbrett
- 172: Klotz
- 173: Erste Deckplatte
- 174: Zweite Deckplatte
- 175: Kernschicht
- 176: Erste Teilschicht
- 177: Zweite Teilschicht
- 2: Sandwich-Block
- 20: Lage
- 20a: Erste Lage
- 20b: Zweite Lage
- 21: Durchgangsloch
- 22: Zwischenplatte
- 221: Erste Plattenseite
- 222: Zweite Plattenseite
- L: Längserstreckungsrichtung
- b: Segmentbreite
- t: Segmenttiefe
- h: Segmenthöhe
- Bₚ: Palettenbreite
- Tₚ: Palettentiefe
- Hₚ: Palettenhöhe
- B_{B}: Blockbreite
- T_{B}: Blocktiefe
- H_{B}: Blockhöhe
- S₁: Erste Seite
- S₂: Zweite Seite

## Patentansprüche

1. Palette (1), aufweisend einen Grundkörper (10), der zumindest die folgenden Komponenten aufweist:
- eine erste Platte (11) und eine parallel zu der ersten Platte (11) angeordnete zweite Platte (12), wobei die erste Platte (11) und die zweite Platte (12) jeweils in Richtung einer Palettenbreite (B_{P}) und einer Palettentiefe (T_{P}) erstreckt sind, wobei die Palette (1) eine senkrecht zu der Palettenbreite (B_{P}) und der Palettentiefe (T_{P}) verlaufende Palettenhöhe (H_{P}) aufweist,
- eine zwischen der ersten Platte (11) und der zweiten Platte (12) angeordnete Schicht (13), die eine Mehrzahl von Rohrsegmenten (14) aufweist,
wobei die Schicht (13) wenigstens eine in Richtung der Palettenhöhe (H_{P}) durchgängige Aussparung (131) aufweist, wobei die erste Platte (11) wenigstens eine erste Öffnung (111) aufweist, die mit der wenigstens einen Aussparung (131) zumindest teilweise überlappt,
**dadurch gekennzeichnet, dass** die Rohrsegmente (14) jeweils zwei Schnittenden (141,142) aufweisen, welche die Rohrsegmente (14) in Umfangsrichtung begrenzen, und wobei die Rohrsegmente (14) jeweils eine Segmenttiefe (t), eine Segmentbreite (b) und eine Segmenthöhe (h) aufweisen, wobei die Segmenttiefe (t) der maximalen Erstreckung des Rohrsegments (14) in Längserstreckungsrichtung (l) entspricht, und wobei die Segmentbreite (b) der maximalen Erstreckung des Rohrsegments (14) entlang einer Verbindunglinie zwischen den Schnittenden (141,142) senkrecht zu der Längserstreckungsrichtung (I) entspricht, und wobei die Segmenthöhe (h) der maximalen Erstreckung senkrecht zu der Segmenttiefe (t) und der Segmentbreite (b) entspricht,
und wobei die Rohrsegmente (14) derart in der Schicht (13) angeordnet sind, dass
- die Segmenttiefe (t) in Richtung der Palettenhöhe (H_{P}) verläuft,
- die Segmentbreite (b) in Richtung der Palettenbreite (B_{P}) verläuft und
- die Segmenthöhe (h) in Richtung der Palettentiefe (T_{P}) verläuft,
wobei die Schicht (13) mehrere in Richtung der Palettenbreite (B_{P}) verlaufende Reihen (132) von Rohrsegmenten (14) aufweist, wobei insbesondere benachbarte Rohrsegmente (14) innerhalb der Reihen (132) mechanisch verbunden sind, wobei die Schicht (13) wenigstens eine in Richtung der Palettenbreite (B_{P}) verlaufende erste Reihe (132a) von Rohrsegmenten (14'), wenigstens eine in Richtung der Palettenbreite (B_{P}) verlaufende zweite Reihe (132b) von Rohrsegmenten (14") und wenigstens eine Leiste (15) aufweist, wobei die Rohrsegmente (14') der wenigstens einen ersten Reihe (132a) und die Rohrsegmente (14") der wenigstens einen zweiten Reihe (132b) über die wenigstens eine Leiste (15) mechanisch verbunden sind, wobei insbesondere die Rohrsegmente (14') der wenigstens einen ersten Reihe (132a) mittels ihrer Schnittenden (141',142') mit einer ersten Leistenseite (151) der wenigstens einen Leiste (15) mechanisch verbunden sind, und wobei die Rohrsegmente (14") der wenigstens einen zweiten Reihe (132b) mittels ihrer Schnittenden (141",142") mit einer der ersten Leistenseite (151) gegenüberliegenden zweiten Leistenseite (152) der wenigstens einen Leiste (15) mechanisch verbunden sind, und wobei die erste Platte (11), die zweite Platte (12) und/oder die Rohrsegmente (14) einen Holzwerkstoff aufweisen oder aus einem Holzwerkstoff gebildet sind.

2. Palette (1) nach Anspruch 1, **dadurch gekennzeichnet, dass** die wenigstens eine Aussparung (131) in Richtung der Palettenbreite (B_{P}) eine Erstreckung aufweist, die mindestens der Segmentbreite (b) entspricht und in Richtung der Palettentiefe (T_{P}) eine Erstreckung aufweist, die mindestens der Segmenthöhe (h) entspricht, oder dass die wenigstens eine Aussparung (131) in Richtung der Palettenbreite (B_{P}) eine Erstreckung aufweist, die geringer als die Segmentbreite (b) ist und in Richtung der Palettentiefe (T_{P}) eine Erstreckung aufweist, die geringer als die Segmenthöhe (h) ist.

3. Palette (1) nach einem der Ansprüche 1 oder 2, **dadurch gekennzeichnet, dass** die Erstreckung der Aussparung (131) in Richtung der Palettenbreite (B_{P}) mindestens 50 mm beträgt, wobei die Erstreckung in Richtung der Palettentiefe (T_{P}) mindestens 30 mm beträgt.

4. Palette (1) nach einem der Ansprüche 1 bis 3, **dadurch gekennzeichnet, dass** die wenigstens eine Aussparung (131) in Richtung der Palettenbreite (B_{P}) und der Palettentiefe (T_{P}) vollständig von Rohrsegmenten (14) umgeben ist.

5. Palette (1) nach einem der Ansprüche 1 bis 4, **dadurch gekennzeichnet, dass** die zweite Platte (12) wenigstens eine zweite Öffnung (121) aufweist, die mit der wenigstens einen Aussparung (131) zumindest teilweise überlappt, wobei die wenigstens eine zweite Öffnung (121) in Richtung der Palettentiefe (T_{P}) oder in Richtung der Palettenbreite (B_{P}), insbesondere in Richtung der Palettentiefe (T_{P}), eine geringere Erstreckung aufweist als die wenigstens eine erste Aussparung (131), mit der die wenigstens eine zweite Öffnung (121) überlappt.

6. Palette (1) nach einem der Ansprüche 1 bis 5, **dadurch gekennzeichnet, dass** die Palette (1) weiterhin wenigstens einen mit dem Grundkörper (10) mechanisch verbundenen Fuß (16) aufweist, wobei der wenigstens eine Fuß (16) zum mechanischen Verbinden des Fußes (16) mit dem Grundkörper (10) zumindest teilweise in der wenigstens einen Aussparung (131) angeordnet ist.

7. Palette (1) nach Anspruch 6, **dadurch gekennzeichnet, dass** der wenigstens eine Fuß (16) jeweils wenigstens zwei Stützelemente (161), insbesondere genau zwei Stützelemente (161), zum mechanischen Verbinden des wenigstens einen Fußes (16) mit dem Grundkörper (10) und wenigstens ein Verbindungselement (162), insbesondere genau ein Verbindungselement (162), aufweist, wobei die wenigstens zwei Stützelemente (161) mittels des wenigstens einen Verbindungselements (162) jeweils an einer ersten Seite (s₁) mechanisch verbunden sind, wobei insbesondere die wenigstens zwei Stützelemente (161) eine Grundfläche mit einer ersten Seite (s₁) und einer parallel zu der ersten Seite (s₁) angeordneten zweiten Seite (s₂) aufweisen, wobei die wenigstens zwei Stützelemente (161) jeweils über ihre erste Seite (s₁) mit dem wenigstens einen Verbindungselement (162) mechanisch verbunden sind, und wobei die Länge der ersten Seite (s₁) die minimale Erstreckung des jeweiligen Stützelements (161) in Richtung der jeweiligen ersten Seite (s₁) darstellt, und wobei die Länge der zweiten Seite (s₂) die maximale Erstreckung des jeweiligen Stützelements (161) in Richtung der jeweiligen zweiten Seite (s₂) darstellt, wobei insbesondere die zweiten Seiten (s₂) der Stützelemente (161) mit der zweiten Platte (12) des Grundkörpers (10) mechanisch verbunden sind.

8. Palette (1) nach Anspruch 7, **dadurch gekennzeichnet, dass** die wenigstens zwei Stützelemente (161) gegen das wenigstens eine Verbindungselement (162) um die jeweilige erste Seite des jeweiligen Stützelements klappbar sind, so dass ein Winkel zwischen der Erstreckungsebene des jeweiligen Stützelements (161) und des wenigstens einen Verbindungselements (162) veränderbar ist.

9. Palette (1) nach einem der Ansprüche 1 bis 8, **dadurch gekennzeichnet, dass** die Palette (1) wenigstens eine mit dem Grundkörper (10) mechanisch verbundene Kufe (17) aufweist, die ein parallel zu der ersten Platte (11) angeordnetes Bodenbrett (171) und wenigstens einen mit dem Bodenbrett (171) mechanisch verbundenen Klotz (172) aufweist, wobei der wenigstens eine Klotz (172) zumindest teilweise in der wenigstens einen Aussparung (131) angeordnet ist, wobei insbesondere der wenigstens eine Klotz (172) eine erste Deckplatte (173), eine zweite Deckplatte (174) und eine zwischen der ersten Deckplatte (173) und der zweiten Deckplatte (174) angeordnete Kernschicht (175) aufweist, wobei die Kernschicht (175) wenigstens eine erste Teilschicht (176) und wenigstens eine zweite Teilschicht (177) aufweist, die jeweils aus einer Mehrzahl von parallel in einer Reihe angeordneten Rohrsegmenten (14) gebildet sind, wobei die Rohrsegmente (14) jeweils eine Wandung (145) und zwei Schnittenden (141,142) aufweisen, welche die Rohrsegmente (14) in Umfangsrichtung begrenzen, wobei insbesondere die Rohrsegmente (14) der ersten Teilschicht (176) mittels ihrer Schnittenden (141,142) mit der ersten Deckplatte (173) mechanisch verbunden sind, und wobei die Rohrsegmente (14) der zweiten Teilschicht (177) mittels ihrer Schnittenden (141,142) mit der zweiten Deckplatte (174) mechanisch verbunden sind.

10. Kufe (17) für eine Palette (1) nach einem der Ansprüche 1 bis 9, aufweisend ein Bodenbrett (171) und wenigstens einen mit dem Bodenbrett (171) mechanisch verbundenen Klotz (172), wobei der wenigstens eine Klotz (172) eine erste Deckplatte (173), eine zweite Deckplatte (174) und eine zwischen der ersten Deckplatte (173) und der zweiten Deckplatte (174) angeordnete Kernschicht (175) aufweist, wobei die Kernschicht (175) wenigstens eine erste Teilschicht (176) und wenigstens eine zweite Teilschicht (177) aufweist, die jeweils aus einer Mehrzahl von parallel in einer Reihe angeordneten Rohrsegmenten (14) gebildet sind, wobei die Rohrsegmente (14) jeweils eine Wandung (145) und zwei Schnittenden (141,142) aufweisen, welche die Rohrsegmente (14) in Umfangsrichtung begrenzen, wobei die Rohrsegmente (14) der ersten Teilschicht (176) mittels ihrer Schnittenden (141,142) mit der ersten Deckplatte (173) mechanisch verbunden sind, und wobei die Rohrsegmente (14) der zweiten Teilschicht (177) mittels ihrer Schnittenden (141,142) mit der zweiten Deckplatte (174) mechanisch verbunden sind.

11. Sandwich-Block (2) zur Erzeugung einer Schicht (13) einer Palette (1) nach einem der Ansprüche 1 bis 9, wobei der Sandwich-Block (2) eine Blockbreite (B_{B}), eine senkrecht zu der Blockbreite (B_{B}) verlaufende Blocktiefe (T_{B}) und eine senkrecht zu der Blockbreite (B_{B}) und der Blocktiefe (T_{B}) verlaufende Blockhöhe (H_{B}) aufweist, und wobei der Sandwich-Block (2) eine Mehrzahl von in Richtung der Blockbreite (B_{B}) erstreckten und in Richtung der Blockhöhe (H_{B}) gestapelten Lagen (20), aufweist, wobei die Lagen (20) jeweils eine Mehrzahl von Rohrsegmenten (14) aufweisen, wobei der Sandwich-Block (2) wenigstens eine erste Lage (20a), wenigstens eine zweite Lage (20b) und wenigstens eine Zwischenplatte (22) aufweist, wobei die wenigstens eine erste Lage (20a) und die wenigstens eine zweite Lage (20b) jeweils in Richtung der Blockbreite (B_{B}) und der Blocktiefe (T_{B}) verlaufen und jeweils eine Mehrzahl von Rohrsegmenten (14‴, 14ʺʺ) aufweisen, wobei die Rohrsegmente (14‴) der wenigstens einen ersten Lage (20a) und die Rohrsegmente (14ʺʺ) der wenigstens einen zweiten Lage (20b) über die wenigstens eine Zwischenplatte (22) mechanisch verbunden sind, wobei die Rohrsegmente (14) jeweils zwei Schnittenden (141,142) aufweisen, welche die Rohrsegmente (14) in Umfangsrichtung begrenzen, und wobei die Rohrsegmente (14)
- eine Segmenttiefe (t) in Längserstreckungsrichtung (I) des jeweiligen Rohrsegments (14),
- eine Segmentbreite (b) entlang einer Verbindunglinie zwischen den Schnittenden (141,142) senkrecht zu der Längserstreckungsrichtung (l) und
- eine Segmenthöhe (h) senkrecht zu der Segmenttiefe (t) und der Segmentbreite (b) aufweisen,
wobei die Rohrsegmente (14) derart in den Lagen (20) angeordnet sind, dass die Segmenttiefe (t) der Rohrsegmente (14) in Richtung der Blocktiefe (T_{B}) verläuft und dass die Segmentbreite (b) entlang der Blockbreite (B_{B}) verläuft, wobei
der Sandwich-Block (2) wenigstens ein in Richtung der Blocktiefe (T_{B}) durchgängiges Durchgangsloch (21) aufweist,
wobei das wenigstens eine Durchgangsloch (21) in Richtung der Blockhöhe (H_{B}) eine Erstreckung aufweist, die mindestens der Segmenthöhe (h) der Rohrsegmente (14) entspricht und in Richtung der Blockbreite (B_{B}) eine Erstreckung aufweist, die mindestens der Segmentbreite (b) der Rohrsegmente (14) entspricht,
wobei insbesondere die Erstreckung des Durchgangslochs (21) in Richtung der Blockhöhe (H_{B}) mindestens 50 mm beträgt, wobei die Erstreckung des Durchgangslochs (21) in Richtung der Blockbreite (B_{B}) mindestens 30 mm beträgt,
und wobei die Rohrsegmente (14) einen Holzwerkstoff aufweisen oder aus einem Holzwerkstoff gebildet sind.

12. Sandwich-Block (2) nach Anspruch 11, **dadurch gekennzeichnet, dass** die Rohrsegmente (14‴) der wenigstens einen ersten Lage (20a) mittels ihrer Schnittenden (141‴,142‴) mit einer ersten Plattenseite (221) der wenigstens einen Zwischenplatte (22) mechanisch verbunden sind, und wobei die Rohrsegmente (14ʺʺ) der wenigstens einen zweiten Lage (20b) mittels ihrer Schnittenden (141ʺʺ,142ʺʺ) mit einer der ersten Plattenseite (221) gegenüberliegenden zweiten Plattenseite (222) der wenigstens einen Zwischenplatte (22) mechanisch verbunden sind.

13. Verfahren zur Herstellung einer Palette (1) nach einem der Ansprüche 1 bis 9, wobei das Verfahren zumindest die folgenden Schritte aufweist:
- Bereitstellen eines Sandwich-Blocks (2) nach einem der Ansprüche 11 oder 12,
- Bilden einer Schicht (13) durch Zerteilen des Sandwich-Blocks (2) in Richtung der Blockbreite (B_{B}) senkrecht zu der Längserstreckungsrichtung (I) der Rohrsegmente (14), wobei wenigstens eine Aussparung (131) der Schicht (13) durch einen Abschnitt des wenigstens einen Durchgangslochs (21) gebildet wird,
- Anordnen der Schicht (13) auf einer ersten Platte (11), die wenigstens eine erste Öffnung (111) aufweist, so dass die wenigstens eine Aussparung (131) der Schicht (13) mit der wenigstens einen ersten Öffnung (111) zumindest teilweise überlappt, und mechanisches Verbinden der Schicht (13) mit der ersten Platte (11),
- Anordnen einer zweiten Platte (12) auf der Schicht (13) auf einer der ersten Platte (11) gegenüberliegenden Seite parallel zu der ersten Platte (11) und mechanisches Verbinden der zweiten Platte (12) mit der Schicht (13), wobei der Grundkörper (10) gebildet wird, wobei insbesondere die zweite Platte (12) wenigstens eine zweite Öffnung (121) aufweist, wobei die zweite Platte (12) derart auf der Schicht (13) angeordnet wird, dass die wenigstens eine zweite Öffnung (121) zumindest teilweise mit der wenigstens einen Aussparung (131) überlappt, und wobei die erste Platte (11), die zweite Platte (12) und/oder die Rohrsegmente (14) einen Holzwerkstoff aufweisen oder aus einem Holzwerkstoff gebildet sind.

14. Verfahren nach Anspruch 13, wobei weiterhin durch die wenigstens eine erste Öffnung (111) der ersten Platte (11) wenigstens ein Fuß (16) oder wenigstens ein Klotz (172) einer Kufe (17), insbesondere nach Anspruch 10, in die wenigstens eine Aussparung (131) eingebracht wird, die mit der wenigstens einen ersten Öffnung (111) überlappt, wobei insbesondere der wenigstens eine Fuß (16) oder der wenigstens eine Klotz (172) mit dem Grundkörper (10) mechanisch verbunden wird und/oder wobei weiterhin durch die wenigstens eine zweite Öffnung (121) der zweiten Platte (12) wenigstens ein Fuß (16) in die wenigstens eine Aussparung (131) eingebracht wird, die mit der wenigstens einen zweiten Öffnung (121) überlappt, wobei insbesondere der wenigstens eine Fuß (16) mit dem Grundkörper (10) mechanisch verbunden wird.

## Claims

1. A pallet (1), having a base body (10) comprising at least the following components:
- a first plate (11) and a second plate (12) arranged parallel to the first plate (11), wherein the first plate (11) and the second plate (12) are each extended in the direction of a pallet width (B_{P}) and a pallet depth (T_{P}), wherein the pallet (1) has a pallet height (H_{P}) running perpendicular to the pallet width (B_{P}) and the pallet depth (T_{P}),
- a layer (13) arranged between the first plate (11) and the second plate (12), which comprises a plurality of tube segments (14),
wherein the layer (13) comprises at least one continuous cutout (131) in the direction of the pallet height (H_{P}), wherein the first plate (11) has at least a first opening (111) which at least partially overlaps with the at least one cutout (131),
**characterised in that** the tube segments (14) each comprise two cut ends (141, 142) which limit the tube segments (14) in the circumferential direction, and wherein the tube segments (14) each have a segment depth (t), a segment width (b) and a segment height (h), wherein the segment depth (t) corresponds to the maximum extension of the tube segment (14) in the longitudinal extension direction (1), and wherein the segment width (b) corresponds to the maximum extension of the tube segment (14) along a connecting line between the cut ends (141, 142) perpendicular to the longitudinal extension direction (1), and wherein the segment height (h) corresponds to the maximum extension perpendicular to the segment depth (t) and the segment width (b), and wherein the tube segments (14) are arranged in the layer (13) in such a way that
- the segment depth (t) runs in the direction of the pallet height (H_{P}),
- the segment width (b) runs in the direction of the pallet width (B_{P}) and
- the segment height (h) runs in the direction of the pallet depth (T_{P}),
wherein the layer (13) comprises several rows (132) of tube segments (14) running in the direction of the pallet width (B_{P}), wherein in particular adjacent tube segments (14) are mechanically connected within the rows (132), wherein the layer (13) comprises at least one first row (132a) of tube segments (14') running in the direction of the pallet width (B_{P}), at least one second row (132b) of tube segments (14") running in the direction of the pallet width (B_{P}) and at least one strip (15), wherein the tube segments (14') of the at least one first row (132a) and the tube segments (14") of the at least one second row (132b) are mechanically connected via the at least one strip (15), wherein in particular the tube segments (14') of the at least one first row (132a) are mechanically connected by means of their cut ends (141', 142') to a first strip side (151) of the at least one strip (15), and wherein the tube segments (14") of the at least one second row (132b) are mechanically connected by means of their cut ends (141", 142") to a second strip side (152) of the at least one strip (15) opposite the first strip side (151), and wherein the first plate (11), the second plate (12) and/or the tube segments (14) comprise a wood material or are formed from a wood material.

2. The palette (1) according to claim 1, **characterised in that** the at least one cutout (131) in the direction of the pallet width (B_{P}) has an extension which corresponds at least to the segment width (b) and in the direction of the pallet depth (T_{P}) an extension which corresponds at least to the segment height (h), or that the at least one cutout (131) in the direction of the pallet width (B_{P}) has an extension which is less than the segment width (b) and in the direction of the pallet depth (T_{P}) an extension which is less than the segment height (h).

3. The palette (1) according to any one of claims 1 or 2, **characterised in that** the extension of the cutout (131) in the direction of the pallet width (B_{P}) amounts to at least 50 mm, wherein the extension in the direction of the pallet depth (T_{P}) amounts to at least 30 mm.

4. The pallet (1) according to any one of claims 1 to 3, **characterised in that** the at least one cutout (131) is completely surrounded by tube segments (14) in the direction of the pallet width (B_{P}) and the pallet depth (T_{P}).

5. The pallet (1) according to any one of claims 1 to 4, **characterised in that** the second plate (12) has at least one second opening (121) which at least partially overlaps with the at least one cutout (131), wherein the at least one second opening (121) in the direction of the pallet depth (T_{P}) or in the direction of the pallet width (B_{P}), in particular in the direction of the pallet depth (T_{P}), has a smaller extension than the at least one first cutout (131), with which the at least one second opening (121) overlaps.

6. The pallet (1) according to any one of claims 1 to 5, **characterised in that** the pallet (1) further comprises at least one foot (16) mechanically connected to the base body (10), wherein the at least one foot (16) is at least partially arranged in the at least one cutout (131) for mechanically connecting the foot (16) to the base body (10).

7. The pallet (1) according to claim 6, **characterised in that** the at least one foot (16) in each case comprises at least two support members (161), in particular precisely two support members (161), for mechanically connecting the at least one foot (16) to the base body (10) and at least one connection element (162), in particular precisely one connection element (162), wherein the at least two support members (161) are each mechanically connected at a first side (s₁) by means of the at least one connection element (162), wherein in particular the at least two support members (161) comprise a base area with a first side (s₁) and a second side (s₂) arranged parallel to the first side (s₁), wherein the at least two support members (161) are each mechanically connected to the at least one connection element (162) via their first side (s₁), and wherein the length of the first side (s₁) represents the minimum extension of the respective support member (161) in the direction of the respective first side (s₁), and wherein the length of the second side (s₂) represents the maximum extension of the respective support member (161) in the direction of the respective second side (s₂), wherein in particular the second sides (s₂) of the support members (161) are mechanically connected to the second plate (12) of the base body (10).

8. The pallet (1) **according to claim 7, characterised in that** the at least two support members (161) can be folded against the at least one connection element (162) about the respective first side of the respective support member, so that an angle between the extension plane of the respective support member (161) and the at least one connection element (162) can be changed.

9. The pallet (1) according to any one of claims 1 to 8, **characterised in that** the pallet (1) comprises at least one skid (17) mechanically connected to the base body (10), which comprises a bottom board (171) arranged parallel to the first plate (11) and at least one block (172) mechanically connected to the bottom board (171), wherein at least one block (172) is arranged at least partially in the at least one cutout (131), wherein in particular the at least one block (172) comprises a first cover plate (173), a second cover plate (174) and a core layer (175) arranged between the first cover plate (173) and the second cover plate (174), wherein the core layer (175) comprises a at least a first sub-layer (176) and at least a second sub-layer (177), each of which is formed by a plurality of tube segments (14) arranged in parallel in a row, wherein the tube segments (14) each comprise a wall (145) and two cut ends (141, 142), which limit the tube segments (14) in the circumferential direction, wherein in particular the tube segments (14) of the first sub-layer (176) are mechanically connected to the first cover plate (173) by means of their cut ends (141, 142), and wherein the tube segments (14) of the second sub-layer (177) are mechanically connected to the second cover plate (174) by means of their cut ends (141, 142).

10. A skid (17) for a pallet (1) according to any one of claims 1 to 9, comprising a bottom board (171) and at least one block (172) mechanically connected to the bottom board (171), wherein the at least one block (172) comprises a first cover plate (173), a second cover plate (174) and a core layer (175) arranged between the first cover plate (173) and the second cover plate (174), wherein the core layer (175) comprises at least a first sub-layer (176) and at least a second sub-layer (177), each of which is formed by a plurality of tube segments (14) arranged in parallel in a row, wherein the tube segments (14) each have a wall (145) and two cut ends (141, 142), which limit the tube segments (14) in the circumferential direction, wherein the tube segments (14) of the first sub-layer (176) are mechanically connected to the first cover plate (173) by means of their cut ends (141, 142), and wherein the tube segments (14) of the second sub-layer (177) are mechanically connected to the second cover plate (174) by means of their cut ends (141, 142).

11. A sandwich block (2) for creating a layer (13) of a pallet (1) according to any one of claims 1 to 9, wherein the sandwich block (2) has a block width (B_{B}), a block depth (T_{B}) running perpendicular to the block width (B_{B}) and a block height (H_{B}) running perpendicular to the block width (B_{B}) and the block depth (T_{B}), and wherein the sandwich block (2) comprises a plurality of layers (20) extended in the direction of the block width (B_{B}) and stacked in the direction of the block height (H_{B}), wherein the layers (20) each comprise a plurality of tube segments (14), wherein the sandwich block (2) comprises at least a first layer (20a), at least a second layer (20b) and at least one intermediate plate (22), wherein the at least one first layer (20a) and the at least one second layer (20b) each run in the direction of the block width (B_{B}) and the block depth (T_{B}) and each comprise a plurality of tube segments (14‴, 14ʺʺ), wherein the tube segments (14''') of the at least one first layer (20a) and the tube segments (14ʺʺ) of the at least one second layer (20b) are mechanically connected via the at least one intermediate plate (22), wherein the tube segments (14) each comprise two cut ends (141, 142) which limit the tube segments (14) in the circumferential direction, and wherein the tube segments (14) have
- a segment depth (t) in the longitudinal extension direction (1) of the respective tube segment (14),
- a segment width (b) along a connecting line between the cut ends (141, 142) perpendicular to the longitudinal extension direction (1) and
- a segment height (h) perpendicular to the segment depth (t) and the segment width (b),
wherein the tube segments (14) are arranged in layers (20) in such a way that the segment depth (t) of the tube segments (14) runs in the direction of the block depth (T_{B}) and that the segment width (b) runs along the block width (B_{B}),
wherein the sandwich block (2) comprises at least one continuous through hole (21) in the direction of the block depth (T_{B}),
wherein the at least one through hole (21) in the direction of the block height (H_{B}) has an extension, which at least corresponds to the segment height (h) of the tube segments (14) and in the direction of the block width (B_{B}) an extension which at least corresponds to the segment width (b) of the tube segments (14),
wherein in particular the extension of the through hole (21) in the direction of the block height (H_{B}) amounts to at least 50 mm, wherein the extension of the through hole (21) in the direction of the block width (B_{B}) amounts to at least 30 mm,
and wherein the tube segments (14) comprise a wood material or are formed from a wood material.

12. The sandwich block (2) according to claim 11, **characterised in that** the tube segments (14‴) of the at least one first layer (20a) are mechanically connected by means of their cut ends (141‴, 142‴) to a first plate side (221) of the at least one intermediate plate (22), and wherein the tube segments (14ʺʺ) of the at least one second layer (20b) are mechanically connected by means of their cut ends (141ʺʺ, 142ʺʺ) to a second plate side (222) opposite the first plate side (221) of at least one intermediate plate (22).

13. A method for producing a pallet (1) according to any one of claims 1 to 9, wherein the method comprises at least the following steps:
- provision of a sandwich block (2) according to any of claims 11 or 12,
- formation of a layer (13) by splitting the sandwich block (2) in the direction of the block width (B_{B}) perpendicular to the longitudinal extension direction (1) of the tube segments (14), wherein at least one cutout (131) of the layer (13) is formed by a section of the at least one through hole (21),
- arrangement of the layer (13) on a first plate (11), which comprises at least a first opening (111), so that the at least one cutout (131) of the layer (13) at least partially overlaps the at least one first opening (111), and mechanical connection of the layer (13) to the first plate (11),
- arrangement of a second plate (12) on the layer (13) on a side opposite the first plate (11) parallel to the first plate (11) and mechanical connection of the second plate (12) to the layer (13), wherein the base body (10) is formed, wherein in particular the second plate (12) comprises at least a second opening (121), wherein the second plate (12) is arranged on the layer (13) in such a way that the at least one second opening (121) at least partially overlaps the at least one cutout (131), and wherein the first plate (11), the second plate (12) and/or the tube segments (14) comprise a wood material or are formed from a wood material.

14. The method according to claim 13, wherein furthermore at least one foot (16) or at least one block (172) of a skid (17), in particular according to claim 10, is inserted through the at least one first opening (111) of the first plate (11) into the at least one cutout (131), which overlaps with the at least one first opening (111), wherein in particular the at least one foot (16) or the at least one block (172) is mechanically connected to the base body (10) and/or wherein, furthermore, at least one foot (16) is inserted through the at least one second opening (121) of the second plate (12) into the at least one cutout (131), which overlaps with the at least one second opening (121), wherein in particular the at least one foot (16) is mechanically connected to the base body (10).

## Revendications

1. Palette (1), comportant un corps de base (10), qui comporte au moins les composants suivants:
- un premier plateau (11) et un deuxième plateau (12), placé à la parallèle du premier plateau (11), le premier plateau (11) et le deuxième plateau (12) s'étendant chacun dans la direction d'une largeur de palette (Bₚ) et d'une profondeur de palette (Tₚ), la palette (1) présentant une hauteur de palette (Hₚ) s'écoulant à la perpendiculaire de la largeur de palette (Bₚ) et de la profondeur de palette (Tₚ),
- une couche (13), placée entre le premier plateau (11) et le deuxième plateau (12), qui comporte une pluralité de segments tubulaires (14),
la couche (13) comportant au moins un évidement (131) continu dans la direction de la hauteur de palette (Hp), le premier plateau (11) comportant au moins un premier orifice (111), qui chevauche au moins partiellement l'au moins un évidement (131),
**caractérisée en ce que** les segments tubulaires (14) comportent chacun deux extrémités de coupe (141, 142), lesquelles délimitent les segments tubulaires (14) dans la direction circonférentielle et les segments tubulaires (14) présentant chacun une profondeur de segment (t), une largeur de segment (b) et une hauteur de segment (h), la profondeur de segment (t) correspondant à l'extension maximale du segment tubulaire (14) dans la direction d'extension longitudinale (1) et la largeur de segment (b) correspondant à l'extension maximale du segment tubulaire (14), le long d'une ligne d'assemblage entre les extrémités de coupe (141, 142), à la perpendiculaire de la direction d'extension longitudinale (1) et la hauteur de segment (h) correspondant à l'extension maximale à la perpendiculaire de la profondeur de segment (t) et de la largeur de segment (b),
et les segments tubulaires (14) étant placés dans la couche (13), de sorte que
- la profondeur de segment (t) s'écoule dans la direction de la hauteur de palette (Hₚ),
- la largeur de segment (b) s'écoule dans la direction de la largeur de palette (Bₚ) et
- la hauteur de segment (h) s'écoule dans la direction de la profondeur de palette (Tₚ),
la couche (13) comportant plusieurs rangées (132) de segments tubulaires (14) s'écoulant dans la direction de la largeur de palette (Bₚ), notamment des segments tubulaires (14) voisins à l'intérieur des rangées (132) étant assemblés mécaniquement, la couche (13) comportant au moins une première rangée (132a) de segments tubulaires (14') s'écoulant dans la direction de la largeur de palette (Bₚ), au moins une deuxième rangée (132b) de segments tubulaires (14") s'écoulant dans la direction de la largeur de palette (Bₚ) et au moins une baguette (15), les segments tubulaires (14') de l'au moins une première rangée (132a) et les segments tubulaires (14") de l'au moins une deuxième rangée (132b) étant assemblés mécaniquement par l'intermédiaire de l'au moins une baguette (15), notamment les segments tubulaires (14') de l'au moins une première rangée (132a) étant mécaniquement assemblés au moyen de leurs extrémités de coupe (141', 142') avec un premier côté de baguette (151) de l'au moins une baguette (15) et les segments tubulaires (14") de l'au moins une deuxième rangée (132b) étant mécaniquement assemblés au moyen de leurs extrémités de coupe (141", 142") avec un deuxième côté de baguette (152) placé au vis-à-vis du premier côté de baguette (151) de l'au moins une baguette (15) et le premier plateau (11), le deuxième plateau (12) et / ou les segments tubulaires (14) comportant une matière à base de bois ou étant constitués en une matière à base de bois.

2. Palette (1) selon la revendication 1, **caractérisée en ce que** l'au moins un évidement (131) présente dans la direction de la largeur de palette (Bₚ) une extension qui correspond au moins à la largeur de segment (b) et dans la direction de la profondeur de palette (Tₚ) une extension qui correspond au moins à la hauteur de segment (h) ou **en ce que** l'au moins un évidement (131) présente dans la direction de la largeur de palette (Bₚ) une extension qui est inférieure à la largeur de segment (b) et présente dans la direction de la profondeur de palette (Tₚ) une extension qui est inférieure à la hauteur de segment (h).

3. Palette (1) selon l'une quelconque des revendications 1 ou 2, **caractérisée en ce que** l'extension de l'évidement (131) dans la direction de la largeur de palette (Bₚ) s'élève à au moins 50 mm, l'extension dans la direction de la profondeur de palette (Tₚ) s'élevant à au moins 30 mm.

4. Palette (1) selon l'une quelconque des revendications 1 à 3, **caractérisée en ce que** dans la direction de la largeur de palette (Bₚ) et de la profondeur de palette (Tₚ), l'au moins un évidement (131) est totalement entouré de segments tubulaires (14).

5. Palette (1) selon l'une quelconque des revendications 1 à 4, **caractérisée en ce que** le deuxième plateau (12) comporte au moins un deuxième orifice (121), qui chevauche au moins partiellement l'au moins un évidement (131), dans la direction de la profondeur de palette (Tₚ) ou dans la direction de la largeur de palette (Bₚ), notamment dans la direction de la profondeur de palette (Tₚ), l'au moins un deuxième orifice (121) présentant une extension inférieure à celle de l'au moins un premier évidement (131), qui est chevauché par l'au moins un deuxième orifice (121).

6. Palette (1) selon l'une quelconque des revendications 1 à 5, **caractérisée en ce que** la palette (1) comporte par ailleurs au moins un pied (16) mécaniquement assemblé avec le corps de base (10), pour l'assemblage mécanique du pied (16) avec le corps de base (10), l'au moins un pied (16) étant placé au moins en partie dans l'au moins un évidement (131).

7. Palette (1) selon la revendication 6, **caractérisée en ce que** l'au moins un pied (16) comporte respectivement au moins deux éléments d'appui (161), notamment exactement deux éléments d'appui (161), pour l'assemblage mécanique de l'au moins un pied (16) avec le corps de base (10) et au moins un élément d'assemblage (162), notamment exactement un élément d'assemblage (162), les au moins deux éléments d'appui (161) étant assemblés mécaniquement au moyen de l'au moins un élément d'assemblage (162) chacun sur un premier côté (s₁), notamment les au moins deux éléments d'appui (161) comportant une surface de base pourvue d'un premier côté (s₁) et d'un deuxième côté (s₂), placé à la parallèle du premier côté (s₁), les au moins deux éléments d'appui (161) étant mécaniquement assemblés chacun par l'intermédiaire de leur premier côté (s₁) avec l'au moins un élément d'assemblage (162) et la longueur du premier côté (s₁) représentant l'extension minimale de l'élément d'appui (161) respectif, dans la direction du premier côté (s₁) respectif et la longueur du deuxième côté (s₂) représentant l'extension maximale de l'élément d'appui (161) respectif, dans la direction du deuxième côté (s₂) respectif, notamment les deuxièmes côtés (s₂) des éléments d'appui (161) étant notamment assemblés mécaniquement avec le deuxième plateau (12) du corps de base (10).

8. Palette (1) selon la revendication 7, **caractérisée en ce que** les au moins deux éléments d'appui (161) sont rabattables contre l'au moins un élément d'assemblage (162) autour du premier côté respectif de l'élément d'appui respectif, de sorte qu'un angle entre le plan d'extension de l'élément d'appui (161) respectif et de l'au moins un élément d'assemblage (162) soit variable.

9. Palette (1) selon l'une quelconque des revendications 1 à 8, **caractérisée en ce que** la palette (1) comporte au moins un patin (17) mécaniquement assemblé avec le corps de base (10), qui comporte une planche de fond (171) placée à la parallèle du premier plateau (11) et au moins un billot (172) mécaniquement assemblé avec la planche de fond (171), l'au moins un billot (172) étant placé au moins en partie dans l'au moins un évidement (131), notamment l'au moins un billot (172) comportant une première plaque de recouvrement (173), une deuxième plaque de recouvrement (174) et une couche d'âme (175) placée entre la première plaque de recouvrement (173) et la deuxième plaque de recouvrement (174), la couche d'âme (175) comportant au moins une première couche partielle (176) et au moins une deuxième couche partielle (177), qui sont constituées chacune d'une pluralité de segments tubulaires (14), placés à la parallèle dans une rangée, les segments tubulaires (14) comportant chacun une paroi (145) et deux extrémités de coupe (141, 142), lesquelles délimitent les segments tubulaires (14) dans la direction circonférentielle, notamment le segments tubulaires (14) de la première couche partielle (176) étant mécaniquement assemblés au moyen de leurs extrémités de coupe (141, 142) avec la première plaque de recouvrement (173) et les segments tubulaires (14) de la deuxième couche partielle (177) étant mécaniquement assemblés au moyen de leurs extrémités de coupe (141,142) avec la deuxième plaque de recouvrement (174).

10. Patin (17), destiné à une palette (1) selon l'une quelconque des revendications 1 à 9, comportant une planche de fond (171) et au moins un billot (172) mécaniquement assemblé avec la planche de fond (171), l'au moins un billot (172) comportant une première plaque de recouvrement (173), une deuxième plaque de recouvrement (174) et une couche d'âme (175) placée entre la première plaque de recouvrement (173) et la deuxième plaque de recouvrement (174), la couche d'âme (175) comportant au moins une première couche partielle (176) et au moins une deuxième couche partielle (177), qui sont constituées chacune d'une pluralité de segments tubulaires (14) placés à la parallèle dans une rangée, les segments tubulaires (14) comportant chacun une paroi (145) et deux extrémités de coupe (141, 142), lesquelles délimitent les segments tubulaires (14) dans la direction circonférentielle, les segments tubulaires (14) de la première couche partielle (176) étant mécaniquement assemblés au moyen de leurs extrémités de coupe (141, 142) avec la première plaque de recouvrement (173) et les segments tubulaires (14) de la deuxième couche partielle (177) étant mécaniquement assemblés au moyen de leurs extrémités de coupe (141, 142) avec la deuxième plaque de recouvrement (174).

11. Bloc en sandwich (2), destiné à créer une couche (13) d'une palette (1) selon l'une quelconque des revendications 1 à 9, le bloc en sandwich (2) présentant une largeur de bloc (B_{B}), une profondeur de bloc (T_{B}), s'écoulant à la perpendiculaire de la largeur de bloc (B_{B}) et une hauteur de bloc (H_{B}), s'écoulant à la perpendiculaire de la largeur de bloc (B_{B}) et de la profondeur de bloc (T_{B}) et le bloc en sandwich (2) comportant une pluralité de strates (20), s'étendant dans la direction de la largeur de bloc (B_{B}) et empilées dans la direction de la hauteur de bloc (H_{B}), les strates (20) comportant chacune une pluralité de segments tubulaires (14), le bloc en sandwich (2) comportant au moins une première strate (20a), au moins une deuxième strate (20b) et au moins un plateau intermédiaire (22), l'au moins une première strate (20a) et l'au moins une deuxième strate (20b) s'écoulant chacune dans la direction de la largeur de bloc (B_{B}) et de la profondeur de bloc (T_{B}) et comportant chacune une pluralité de segments tubulaires (14‴, 14ʺʺ), les segments tubulaires (14‴) de l'au moins une première strate (20a) et les segments tubulaires (14"") de l'au moins une deuxième strate (20b) étant mécaniquement assemblés par l'intermédiaire de l'au moins un plateau intermédiaire (22), les segments tubulaires (14) comportant chacun deux extrémités de coupe (141, 142), lesquelles délimitent les segments tubulaires (14) dans la direction circonférentielle et les segments tubulaires (14) présentant
- une profondeur de segment (t) dans la direction d'extension longitudinale (1) du segment tubulaire (14) respectif,
- une largeur de segment (b), le long d'une ligne d'assemblage entre les extrémités de coupe (141, 142) perpendiculaire à la direction d'extension longitudinale (1) et
- une hauteur de segment (h) perpendiculaire à la profondeur de segment (t) et à la largeur de segment (b),
les segments tubulaires (14) étant placés dans les strates (20) de telle sorte que la profondeur de segment (t) des segments tubulaires (14) s'écoule dans la direction de la profondeur de bloc (T_{B}) et que la largeur de segment (b) s'écoule le long de la largeur de bloc (B_{B}),
le bloc en sandwich (2) comportant au moins un trou de passage (21) continu dans la direction de la profondeur de bloc (T_{B}),
l'au moins un trou de passage (21) présentant dans la direction de la hauteur de bloc (H_{B}) une extension qui correspond au moins à la hauteur de segment (h) des segments tubulaires (14) et présentant dans la direction de la largeur de bloc (B_{B}) une extension qui correspond au moins à la largeur de segment (b) des segments tubulaires (14),
notamment l'extension du trou de passage (21) dans la direction de la hauteur de bloc (H_{B}) s'élevant à au moins 50 mm, l'extension du trou de passage (21) dans la direction de la largeur de bloc (B_{B}) s'élevant à au moins 30 mm,
et les segments tubulaires (14) comportant une matière à base de bois ou étant constitués d'une matière à base de bois.

12. Bloc en sandwich (2) selon la revendication 11, **caractérisé en ce que** les segments tubulaires (14‴) de l'au moins une première strate (20a) sont mécaniquement assemblés au moyen de leurs extrémités de coupe (141‴, 142‴) avec un premier côté de plateau (221) de l'au moins un plateau intermédiaire (22) et les segments tubulaires (14ʺʺ) de l'au moins une deuxième strate (20b) étant mécaniquement assemblés au moyen de leurs extrémités de coupe (141ʺʺ, 142ʺʺ) avec un deuxième côté de plateau (222) placé au vis-à-vis du premier côté de plateau (221) de l'au moins un plateau intermédiaire (22).

13. Procédé, destiné à fabriquer une palette (1) selon l'une quelconque des revendications 1 à 9, le procédé comportant au moins les étapes suivantes, consistant à :
- mettre à disposition un bloc en sandwich (2) selon l'une quelconque des revendications 11 ou 12,
- créer une couche (13) en divisant le bloc en sandwich (2) dans la direction de la largeur de bloc (B_{B}), à la perpendiculaire de la direction d'extension longitudinale (1) des segments tubulaires (14), au moins un évidement (131) de la couche (13) étant constitué par au moins une portion de l'au moins un trou de passage (21),
- placer la couche (13) sur un premier plateau (11), qui comporte au moins un premier orifice (111), de telle sorte que l'au moins un évidement (131) de la couche (13) chevauche au moins partiellement l'au moins un premier orifice (111), et assembler mécaniquement la couche (13) avec le premier plateau (11),
- placer un deuxième plateau (12) sur couche (13) sur un côté placé au vis-à-vis du premier plateau (11), à la parallèle du premier plateau (11) et assembler mécaniquement le deuxième plateau (12) avec la couche (13), le corps de base (10) étant constitué, notamment le deuxième plateau (12) comportant au moins un deuxième orifice (121),
le deuxième plateau (12) étant placé sur la couche (13), de telle sorte que l'au moins un deuxième orifice (121) chevauche au moins partiellement l'au moins un évidement (131),
et
le premier plateau (11), le deuxième plateau (12) et / ou les segments tubulaires (14) comportant une matière à base de bois ou étant constitués d'une matière à base de bois.

14. Procédé selon la revendication 13, étant introduit dans l'au moins un évidement (131) qui chevauche l'au moins un premier orifice (111), à travers l'au moins un premier orifice (111) du premier plateau (11) au moins un pied (16) ou au moins un billot (172) d'un patin (17), notamment selon la revendication 10, notamment l'au moins un pied (16) ou l'au moins un billot (172) étant assemblé mécaniquement avec le corps de base (10) et / ou par ailleurs, à travers l'au moins un deuxième orifice (121) du deuxième plateau (12), au moins un pied (16) étant introduit dans l'au moins un évidement (131), qui chevauche l'au moins un deuxième orifice (121), notamment l'au moins un pied (16) étant mécaniquement assemblé avec le corps de base (10).
